# EUROPÄISCHE PATENTSCHRIFT

(11) **EP 2 406 679 B1**
(45) Veröffentlichungstag und Bekanntmachung des Hinweises auf die Patenterteilung: **25.01.2017**
(21) Anmeldenummer: 10719379.9
(22) Anmeldetag: 11.03.2010
(51) Int. Cl.: G02B 21/24

(54) **AUTOFOKUSVERFAHREN UND AUTOFOKUSEINRICHTUNG**
AUTOFOCUS METHOD AND AUTOFOCUS DEVICE
PROCÉDÉ D'AUTOFOCUS ET SYSTÈME D'AUTOFOCUS

(30) Priorität: 11.03.2009 DE 102009012293; 11.03.2009 DE 102009012292
(43) Veröffentlichungstag der Anmeldung: 18.01.2012
(73) Patentinhaber: Sakura Finetek U.S.A., Inc., Torrance, CA 90501 (US)
(72) Erfinder: HING, Paul, 88696 Owingen-Billafingen (DE); HENSLER, Sven, 78343 Gaienhofen (DE)
(74) Vertreter: Studio Torta S.p.A.
(86) Internationale Anmeldenummer: PCT/IB2010/000518
(87) Internationale Veröffentlichungsnummer: WO 2010/103389

(56) Entgegenhaltungen:
- WO-A2-2005/015120
- FR-A1- 2 620 537

## Beschreibung

Die Anmeldung betrifft ein Autofokusverfahren, bei dem Licht einer Lichtquelle in einem Messlichtfokus in einer Probe fokussiert und von dort zurückgeworfen wird und das zurückgeworfene Licht durch ein optisches System und zumindest eine Blendenöffnung in zwei Lichtpfaden auf zumindest zwei Detektorelemente geführt wird.

### Stand der Technik

Zur automatischen Fokussierung von Mikroskopen auf eine Probe sind zwei Methoden bekannt:
- Es wird die Position einer Probe oder die Entfernung der Probe zu einem Bezugspunkt gemessen, indem von der Probe reflektiertes Licht auf Schemen, Intensität oder dergleichen oder interferometrisch untersucht wird.
- Es wird das Bilder der Probe auf Kontrast, Auflösung, Autokorrelation oder Phasenkontrast hin untersucht.

In der Mikroskopie besteht eine Probe üblicherweise aus einem zu untersuchenden Probenmaterial, das auf einen lichtdurchlässigen Probenträger aufgebracht und mit einem dünnen lichtdurchlässigen Abdeckglas abgedeckt ist. Eine Positionsmessung des Probenmaterials führt häufig zur Messung der Position einer der Reflexionsebenen an den Schichtgrenzen der Probe. Da ein Reflex an der Luft-Abdeckglas-Grenzschicht weit stärker ist als ein Reflex an einer Grenzschicht am Probenmaterial, überstrahlt der Luft-Abdeckglas-Reflex typischerweise den für einen Autofokus geeigneteren Reflex an einer Grenzschicht am Probenmaterial.

Aus der US 6,130,745 ist es bekannt, die Position einer starken Reflexschicht oberhalb oder unterhalb der Probe zu messen und aus der Dicke der Probe auf die Position des Probenmaterials zu schließen, das in einer bekannten Entfernung von der Reflexschicht angeordnet ist. Typischerweise sind jedoch bei der beschrieben Probe bei Verwendung hochauflösenden Systemen die Toleranzen in den Schichtdicken (z.B. des Deckglases oder des Objektträgers) größer als die Tiefenschärfe des AbbildungsSystems und eine Fokussierung kann mit einer solchen Methode nicht immer gewährleistet werden.

WO2005015120 betrifft ein Verfahren und eine Anordnung zur Fokuserfassung in einer optischen Messvorrichtung, wie ein Mikroskop. Die Erfindung ist vorzugsweise für die Detektion zum Messen von biologischen oder chemischen Proben geeignet.

Es ist eine Aufgabe der Erfindung, ein Autofokusverfahren anzugeben, mit dem ein optisches System, z.B. ein Mikroskop, schnell und genau auf eine reflektierende Schicht einer Probe fokussierend eingestellt werden kann.

### Lösung der Aufgabe

Diese Aufgabe wird durch ein Verfahren nach Anspruch 1 gelöst.

Auch Flächen, z.B. Grenzflächen, sind im Folgen als Schichten zu verstehen. Eine der Schichten ist vorteilhafterweise eine Grenzfläche. Die Lichtpfade sind zweckmäßigerweise zumindest teilweise voneinander getrennt, insbesondere sind sie im optischen System voneinander getrennt. Die Trennung erfolgt zweckmäßigerweise durch einen abgeschatteten Bereich zwischen den Lichtpfaden. Die Abschattung kann durch eine Blende erzeugt werden.

Der Verlauf kann durch punktuelle Messungen an mehreren Positionen des Messlichtfokus erfasst werden, zweckmäßigerweise nach Lichtpfaden getrennt. Die Strahlungseigenschaft des zurückgeworfenen Lichts kann die Strahlungsintensität sein. Die eingestellte Fokusposition ist eine gewünschte Fokusposition, in der das optische System zweckmäßigerweise so zur Probe angeordnet ist, dass eine Bildaufnahme der Probe zu gewünschten Bildern führt.

Außerdem kann durch die Erfindung die optische Weglänge der Lichtpfade bestimmt werden. Die optische Weglänge kann hierbei von der Probe zu einer Blende vor einem Detektor gemessen werden. Zweckmäßigerweise werden die optischen Weglängen der Lichtpfade unterschiedlich gewählt. Hierdurch kann durch die getrennte Auswertung der optischen Weglängen der Lichtpfade ein Abweichungssignal zu einer gewählten reflektierenden/streuenden Probenstruktur generiert und darauf oder auf eine in einem bekannten Abstand dazu angeordnete Fokuszielebene fokussiert werden. Eine Licht zurückwerfende Schicht kann eine reflektierende und/oder streuende Probenstruktur sein und kann insbesondere eine Grenzschicht sein, insbesondere eine an das Probenmaterial angrenzende Grenzschicht bzw. Grenzfläche.

Das Autofokusverfahren ist ein Verfahren zum automatisierten Fokussieren des optischen Systems auf eine gewünschte Fokusposition bzw. Fokuszielebene, z.B. innerhalb der Probe. Ist auf die Fokuszielebene fokussiert, kann das optische System ein dort angeordnetes Objekt in eine Bildebene scharf abbilden, in der zweckmäßigerweise ein Detektor bzw. eine Kamera angeordnet ist. Nach der Autofokussierung kann die Probe mit Hilfe einer Kamera abgebildet werden.

Die Probe kann zur Untersuchung vorbereitetes Probenmaterial, einen Träger, auf den es aufgebracht ist, und ein Abdeckglas, das es abdeckt, umfassen. Ebenso eignen sich eine für das Autofokuslicht lichtdurchlässige Schichtstruktur, an deren Schichtgrenzen Reflexion oder Streuung des verwendeten Autofokuslichts auftritt. Die Probe muss keine Lichtdurchlässigkeit für das Autofokuslicht nach der zur Fokussierung bestimmten Schicht aufweisen. Die Reflexion/Streuung an einer Grenzschicht, die hier beschrieben wird, kann auch durch reflektierende/streuende Partikelschicht bzw. Fehlstellenschicht im Material hervorgerufen werden. Die Schichtgrenzen können vorbehandelt (z.B. verspiegelt) werden um die Signale für das Autofokussystem zu erhöhen.

Die Fokuszielebene ist diejenige Ebene innerhalb der Probe, auf die das optische System fokussiert werden soll oder von der die Position des gewünschten Fokus in einem vorbestimmten Abstand entfernt sein soll. Die Fokuszielebene ist zweckmäßigerweise eine Reflexionsebene, an der einfallendes Licht reflektiert wird. Sie kann eine Grenzschicht innerhalb der Probe sein, z.B. die Ebene einer Glas-probenmaterial-Grenzfläche. Ebenso könnte die Streuung an der Probe selbst ausgenutzt werden.

Das auf die Lichtpfade geleitete Licht stammt zweckmäßigerweise aus einer gemeinsamen Lichtquelle, wobei als Lichtquelle nicht nur originär strahlendes Material sondern auch eine reflektierende Schicht, eine Blendenöffnung oder dergleichen bezeichnet wird. Typischerweise wird eine ein- bzw. zweidimensionale Lichtquelle verwendet. Die beiden Lichtpfade sind zweckmäßigerweise symmetrisch zueinander gebildet und insbesondere symmetrisch zur optischen Achse des optischen Systems angeordnet.

Die Lichtquelle, die insbesondere punktförmig oder linien- oder streifenförmig ist oder mehrere Lichtpunkte umfasst, wird im Messlichtfokus in der Probe durch die Optik fokussiert. Sie kann so in der Probe abgebildet werden. Der Messlichtfokus ist üblicherweise punktförmig, kann aber je nach Form der Lichtquelle alternativ ein- oder mehrdimensional sein und z.B. mehrere Punkte umfassen. Der Messlichtfokus liegt vorteilhafterweise im Fokus oder nahe des Fokus des zu fokusierenden optischen Systems. Der Fokus des optischen Systems kann eine Fokusebene sein. Ein im Fokus des optischen Systems liegendes Objekt wird vom optischen System in einer Bildebene scharf abgebildet. Es ist auch möglich, dass der Messlichtfokus in einer voreingestellten Entfernung vom Fokus des optischen Systems liegt. Hierdurch kann der Messlichtfokus auf eine Reflexionsebene eingestellt werden, z.B. eine Grenzschicht Deckglas-Probenmaterial, wobei der Fokus des optischen Systems z.B. 20 *µ*m entfernt von der Grenzschicht im Probenmaterial liegt.

Von dem auf die Probe auftreffenden Licht wird ein Teil zurückgeworfen. Unter Zurückwerfen kann im Folgenden eine Reflexion und/oder eine Streuung verstanden werden. Die das Licht zurückwerfende Schicht kann eine reflektierende und/oder streuende Schicht sein. Wenn im Folgenden von Reflexion gesprochen wird, soll eine Streuung mit umfasst sein können.

Die beiden Lichtpfade sind zweckmäßigerweise symmetrisch um die optische Achse des optischen Systems geführt. Sie treffen vorteilhafterweise in unterschiedlichen Richtungen auf die Probe auf, so dass ihre Reflexe in unterschiedliche Richtungen abgestrahlt und so leicht getrennt voneinander ausgewertet werden können. Es erleichtert die Detektion der einzelnen Schichten in einer Schichtstruktur, wenn der Winkel der auftreffenden Lichtpfade so gewählt wird, dass Reflexe von benachbarten Schichten sich nicht überdecken. Wird eine streuende Schicht zur Bestimmung der Fokusposition verwendet, so sollte die Aufteilung der Lichtpfade erst im Detektionspfad erfolgen.

Vorteilhafterweise hat das Licht des Autofokussystems eine andere Frequenz als Licht, das zur Untersuchung bzw. Abbildung der Probe verwendet werden kann. Die Lichteigenschaft ist zweckmäßigerweise die Lichtintensität.

Das optische System kann dasjenige eines Mikroskops sein. Es weist eine optische Achse auf, die üblicherweise senkrecht zu einer Probenebene gerichtet ist, in der sich die Probe erstreckt.

Die Lichtpfade zwischen Lichtquelle und Releflexionsschicht bzw. zwischen Reflexionsschicht und Detektor können als Beleuchtungspfade bzw. Detektionspfade bezeichnet werden. Ein Autofokuslichtpfad besteht somit aus einem Beleuchtungspfad und einem Detektionspfad. Der Unterschied in der optischen Weglänge kann nun sowohl im Beleuchtungspfad, im Detektionspfad sowie in beiden beiden Pfaden erzeugt werden. Im Folgenden wird eine Realisierung im Detektionspfad beschrieben.

Die Messung der optischen Weglänge der Pfade erfolgt durch mindestens eine, insbesondere jeweils eine Blende vor den Detektoren. Durch eine weglängenabhängige Position der Lichtpfade an der Blende, kann somit auf die optische Weglänge des Systems geschlossen werden. Eine mögliche Realisation wird im Folgenden beschrieben:

Die Detektorelemente sind z.B. relativ zu einem Element des optischen Systems so angeordnet, z.B. zu einer Blende, dass Verläufe einer von den Detektorelementen registrierten Strahlungseigenschaft zueinander unterschiedlich sind.
Das Element des optischen Systems kann eine Blende, z.B. unmittelbar vor den Detektorelementen, ein Strahlteiler, ein Spiegel oder ein anderes geeignetes Element sein.

Wird Licht von einem Lichtpfad an zwei übereinander liegenden Schichten der Probe reflektiert, so ist der Lichtweg bzw. die optische Weglänge des Lichts von der einen Schicht, z.B. zum Detektor oder einer Blende vor dem Detektor, länger als der Lichtweg bzw. die optische Weglänge von der anderen Schicht. Hierdurch können die beiden Lichtwege aus den Beiden Schichten, z.B. zu den Detektorelementen, unterschiedlich sein. Zweckmäßigerweise verlaufen die Lichtwege so, dass sie an einer Blende vor den Detektorelementen unterschiedlich blockiert werden, z.B. wird der eine Lichtweg ganz oder teilweise blockiert und der andere teilweise oder gar nicht. Auf diese Weise können die Lichtwege einzeln und ohne einen anderen Lichtweg von einer anderen Schicht detektiert werden.

Zweckmäßigerweise wird der Hauptreflex von einer Glas-Luft-Grenzschicht oberhalb der Probe durch eine Blende vor den Detektorelementen ausgeblendet während der Messlichtfokus durch darunter liegende, unterschiedlich stark Licht zurückwerfenden Schichten bewegt wird. Hierbei kann Licht von diesen Schichten die Blende passieren. Auf diese Weise können deutlich schwächer reflektierende Schichten als die Glas-Luft-Grenzschicht erkannt werden.

Die Blende bzw. deren Blendenöffnung ist in einer Bildebene des optischen Systems angeordnet, also in einer Ebene, in der ein vom optischen System fokussierter Gegenstand abgebildet wird. Die Blendenöffnung ist ein Abbild der Lichtquelle.

Das Licht, das aus dem Messlichtfokus reflektiert wird, wird zweckmäßigerweise in der Ebene der Blende entsprechend der Form des Messlichtfokus abgebildet. Die Blende ist vorteilhafterweise so angeordnet, dass sie im Messlichtfokus reflektiertes Licht aus beiden Lichtpfaden passieren lässt, insbesondere in gleicher Stärke. Hierbei blockiert die Blende zweckmäßigerweise Licht, das oberhalb und unterhalb des Messlichtfokus reflektiert wurde ganz oder asymmetrisch in Bezug auf die beiden Lichtpfade ab.

Die Blendenöffnung ist zweckmäßigerweise nicht wie üblich symmetrisch um die optische Achse des optischen Systems angeordnet sondern unsymmetrisch zur optischen Achse, insbesondere unsymmetrisch zur optischen Achse der beiden Lichtpfade am Ort der Blendenöffnung. Insbesondere ist sie vollständig außerhalb der optischen Achse angeordnet. Hierdurch kann auf einfache Weise eine Selektion des einen oder anderen Lichtpfads für eine getrennte Auswertung an verschiedenen Positionen des Messlichtfokus erreicht werden.

Eine besonders genaue Fokussierung kann erreicht werden, wenn die Verläufe kontinuierliche erfasst werden.

In einer vorteilhaften Ausführungsform der Erfindung wird ein Fokus des optischen Systems so eingestellt, dass die Signale der Detektorelemente in einem festen Verhältnis zueinander stehen. Bei einem Lichteinfall auf die Detektorelemente in einem festen Verhältnis kann in einfacher Weise eine Symmetrieposition zwischen den Lichtpfaden und damit die Fokuszielebene erfasst werden. Noch einfacher kann dies geschehen, wenn die Signale gleich stark sind. Der Weglängenunterschied der Pfade wird so gewählt, dass bei Überlagerung der Signale die Signale an einer Flanke überlappen und somit einen Schnittpunkt aufweisen. In diesem Schnittpunkt sind die Signale gleich stark. Mithilfe eines Nulldurchgangs des Differenzsignals kann die gleiche Stärke der Signale einfach erfasst werden.

Eine weitere Ausführungsform der Erfindung sieht vor, dass eine Zielposition eines Fokus des optischen Systems mit Hilfe der Signale der Detektorelemente erfasst wird und der Fokus mit Hilfe der erfassen Zielposition durch einen Aktuator eingestellt wird. Die Zielposition kann eine vom Aktuator ausgegebene Position sein, z.B. diejenige Position, an der die Signale der Detektorelemente gleich sind. Es ist auch möglich, diese Einstellung nur als Voreinstellung zu verwenden. Alternativ oder z.B. als Feineinstellung zusätzlich ist es denkbar, die Zielposition durch ein Regeln zu erreichen, wobei die Detektorsignale als Regeleingangssignale und ein Signal zum Steuern des Aktuators als Regelausgangssignal verwendet wird.

Eine einfache und zuverlässige automatische Fokussierung kann erreicht werden, wenn die Detektorelemente so kalibriert sind, dass die Stärke ihres Signals, das von einer Grenzschicht zurückgeworfenem Licht hervorgerufen wird, gleich ist. Hierbei liegt die Fokusposition zweckmäßigerweise in der reflektierenden bzw. das Licht zurückwerfenden Schicht. Alternativ können die Detektorelemente so eingestellt sein, dass ihre Signalstärke gezielt unterschiedlich ist, z.B. um einen gezielten Fokusoffset zu erreichen.

Eine gute Orientierung bei der Suche nach der Zielposition des Fokus bzw. der Fokuszielebene kann erreicht werden, wenn der Messlichtfokus durch die Fokuszielebene auf eine Probe-Luft-Grenzfläche zu bewegt wird und der Reflex der Probe-Luft-Grenzfläche zur groben Orientierung verwendet wird.

Zur Untersuchung einer Probe kann es notwendig sein, dass sie an verschiedenen Orten untersucht wird, z.B. wenn sie größer als ein Blickfeld des Mikroskops ist. Hierzu wird sie nach einer ersten Untersuchung senkrecht zur optischen Achse des optischen Systems bewegt und anschließend erneut untersucht. Eine schnelle automatische Fokussierung nach einer solchen Bewegung kann erreicht werden, die Signale der Detektorelemente nach einer Bewegung der Probe senkrecht zur optischen Achse des optischen Systems auf Plausibilität hinsichtlich einer nach wie vor vorhandenen Grobeinstellung auf die Fokuszielebene überprüft werden. Liegt Plausibilität vor, kann auf eine zeitaufwendige vollständige neue Fokussierung verzichtet werden. Die Plausibilität kann ein Grenzwert im Unterschied der Signale sein, der nicht überschritten werden darf. Die Plausibilitätsprüfung kann außerdem zur Grobeinstellung verwendet werden, so dass bei vorliegender Plausibilität nur noch eine Feineinstellung vorgenommen wird.

Eine weitere vorteilhafte Ausführungsform der Erfindung sieht vor, dass die Lichtquelle ein Lichtmuster aufweist, das in der Probe abgebildet wird. Das Lichtmuster kann ein-, zwei oder dreidimensional sein und ist zweckmäßigerweise in einer Ebene senkrecht zur optischen Achse des optischen Systems in der Probe abgebildet. Hierbei wird reflektiertes Licht aus mehreren Musterpunkten des Lichtmusters jeweils nach Lichtpfaden getrennt erfasst. Hierdurch kann aus mehreren Zielpositionen zu den mehreren Musterpunkten eine Verkippung der Fokuszielebene, z.B. zur optischen Achse, erkannt werden. Die so erzeugten Signale können zur Regelung der Autofokussierung genutzt werden.

Die Erfindung ist außerdem gerichtet auf eine Autofokuseinrichtung mit einem optischen System zum Fokussieren von Licht in einem Messlichtfokus in einer Probe und zum Führen von von dort zurückgeworfenem Licht durch eine Blendenöffnung auf zumindest zwei Detektorelemente.

Es wird vorgeschlagen, dass die Autofokuseinrichtung einen Aktuator und ein Steuermittel umfasst zum Bewegen eines Elements des optischen Systems oder der Probe durch den Aktuator derart, dass der Messlichtfokus in unterschiedlich stark Licht zurückwerfenden Schichten der Probe bewegt wird, wobei die Detektorelemente so angeordnet sind, dass hierbei Verläufe einer von den Detektorelementen registrierten Strahlungseigenschaft unterschiedlich sind und das Steuermittel zum Auswerten der Verläufe an mehreren Positionen des Messlichtfokus vorgesehen ist.

Bei der Bewegung des Elements des optischen Systems relativ zur Probe kann der Aktuator das Element oder die Probe relativ zu einem festen Bezugspunkt, z.B. einem Erdboden, bewegen.

Vorteilhafterweise ist das Steuermittel dazu ausgebildet, einen, mehrere oder alle der oben angeführten Verfahrensschritte zu steuern.

Vorteilhafterweise umfasst die Autofokuseinrichtung ein Messsystem, das dazu vorgesehen ist, den Abstand des Elements des optischen Systems zur Probe oder einen davon abhängigen Abstand zu erfassen, insbesondere auf nicht-optischem Wege. Sobald die Fokusposition optische gefunden wurde, kann der Abstand mit dem weiteren Messsystem gemessen und während der Beleuchtung der Probe gehalten werden.

Zur Aufnahme von Farbbildern ist es bekannt, eine Farbkamera mit einem farbempfindlichen Detektor zu verwenden. Ein farbempfindlicher Detektor ist üblicherweise auf drei Farben beschränkt. Bei Verwendung eines Bayer-Musters besteht ein Pixel jeweils aus einem blau-, einem rot- und zwei grünempfindlichen Detektorzellen, aus deren Signalen alle Zwischenfarben zusammengesetzt werden. Durch die benötigten vier Detektorzellen pro Pixel ist die Auflösung eines solchen Farbdetektors gering.

Zum Erreichen einer hohen Bildauflösung verbunden mit einer hohen Farbauflösung ist ein Linienspektrograph bekannt. Ein Gegenstand wird Linie für Linie abgescannt, wobei das Bild einer Linie spektral aufgefächert wird, beispielsweise durch ein Prisma, sodass ein dreidimensionales Bild der Linie entsteht. Auf diese Weise wird Linie für Linie ein dreidimensionales Bild aufgenommen und abgespeichert und die einzelnen Bilder werden zu einem dreidimensionalen Farbbild zusammengesetzt.

Es ist außerdem bekannt, mehrere Farbfilter nacheinander vor den Detektor zu bewegen und so von einem Gegenstand mehrere Bilder in unterschiedlichen Frequenzbereichen nacheinander aufzunehmen. Die Aufnahmen können zu einem hyperspektralen Bild kombiniert werden.

Es ist eine Aufgabe der Erfindung, ein Verfahren zum Aufnehmen eines Bilds eines Gegenstands anzugeben, mit dem hoch aufgelöste Farbbilder aufgenommen werden können.

Diese Aufgabe wird durch ein Verfahren zum Aufnehmen eines Bildes eines Gegenstands gelöst, bei dem der Gegenstand durch ein optisches System auf mehrere Detektorelemente eines Detektors abgebildet wird und das Bild mit einem Lichtfilter mit mehreren unterschiedlich filternden Filterbereichen in mehrere unterschiedlich gefilterte Bildbereiche aufgeteilt wird. Erfindungsgemäß wird vorgeschlagen, dass die unterschiedlich gefilterten Bildbereiche des Bilds gleichzeitig auf den Detektor abgebildet werden, insbesondere nebeneinander. Auf ein Wechseln von Filtern vor dem Detektor kann verzichtet werden und es können schnell hintereinander Aufnahmen des Gegenstands gemacht werden.

Der Lichtfilter kann ein Spektralfilter oder ein Polarisationsfilter sein. Er kann unmittelbar vor dem Detektor oder direkt auf dem Detektor angeordnet sein. Zweckmäßigerweise ist der Lichtfilter in einer Bildebene des optischen Systems angeordnet, wobei 1/10 der Brennweite des optischen Systems am Lichtfilter als Abstand von der mathematischen Bildebene tolerierbar ist und als noch in der Bildebene angesehen werden kann. Der Lichtfilter kann ein Kantenfilter, Interferenzfilter oder Absorberfilter sein. Die Filterbereiche können spektral unterschiedlich filtern, sodass die Bildbereiche spektral unterschiedlich gefiltert sind. Sie können konkrete Formen annehmen, beispielsweise Streifen, ein Schachbrettmuster und/oder ein Mikromuster, bei dem die Filterbereiche eine Länge und/oder Breite unter 100 *µ*m aufweisen. Zweckmäßigerweise sind die Filterbereiche in ihrer Ausdehnung größer als zwei, insbesondere größer als zehn Detektorelemente oder Pixel. Ebenfalls möglich ist eine räumlich kontinuierlich variierende Filtercharakteristik.

Der Detektor kann als Chip ausgeführt sein und ist zweckmäßigerweise in allen Spektralbereichen der Filterbereiche empfindlich. Er kann ein CCD- (Charge-coupled Device) oder ein CMOS-Sensor (Complementary Metal Oxide Semiconductor) sein. Die Detektorelemente sind vorteilhafterweise als zwei-dimensionales Gitter angeordnet in Form einer Matrix. Der Detektor ist zweckmäßigerweise als monochromer Detektor ausgeführt und ist empfindlich im spektralen Bereich des strukturierten Filters.

Die Abmessungen der Filterbereiche sind vorteilhafterweise an die Abmessungen der Detektorelemente angepasst, beispielsweise indem eine Breite und/oder Länge eines Filterbereichs jeweils ein ganzzahliges Vielfaches einer Größe eines der Detektorelemente des Detektors ist, beispielsweise m x n Detektorelemente. Der Lichtfilter kann direkt am Detektor befestigt sein, beispielsweise direkt auf einem Detektorchip, oder direkt auf die sensitive Flächen des Chip aufgedampft sein.

Die Filterbereiche entsprechen zweckmäßigerweise einer Struktur und/oder Gliederung des Probenabbildes bzw. der Probe oder von Probengefäßen. Sie können so groß sein wie regelmäßige Strukturabschnitte des Probenabbilds und/oder deren Form aufweisen.

In einer vorteilhaften Ausführungsform der Erfindung werden die Filterbereiche von einer zur nächsten Aufnahme des Gegenstands über ein Bildmuster des Bildes bewegt, sodass jeder Punkt des Bildmusters in mehreren Lichteigenschaften, insbesondere Spektren, aufgezeichnet wird. Diese Werte werden zweckmäßigerweise dem Punkt zugeordnet und können dargestellt und/oder abgespeichert werden. Das Bildmuster kann hierbei das gesamte Bild oder ein Ausschnitt des Bildes sein. Die Bewegung ist eine relative Bewegung, wobei die Filterbereiche ruhen können, z.B. relativ zu einem Detektorgehäuse, und das Bildmuster bewegt wird, oder umgekehrt.

Bei einer mehrfachen Aufnahme eines jeden Punkts in mehreren Lichteigenschaften, beispielsweise Farben, kann aus den mehreren Aufnahmen ein Farbbild zusammengesetzt werden. Durch die Aufteilung des Lichtfilters in die Filterbereiche ist bei einer Bewegung des Lichtfilters nur eine kleine Bewegung in der Größe einer Abmessung eines einzigen Filterbereichs ausreichend, sodass nicht der gesamte Lichtfilter vom Detektor weg und ein neuer Lichtfilter zum Detektor bewegt werden muss. Durch die geringe Bewegungsstrecke kann die Bewegung sehr schnell ausgeführt werden.

Zum Erreichen einer hohen Lichtausbeute ist es vorteilhaft, wenn Signalbeiträge in den einzelnen Detektorelementen innerhalb eines Filterbereichs, die bei einer Bewegung des Probenabbildes relativ zum Detektor eines Probenbereichs zugeordnet werden können, in einem Wert kumuliert werden. Solche kumulierten Werte eines Probenbereichs aus verschiedenen Filterbereichen können zur Gesamtlichteigenschaftsinformation des Probenbereichs vereint werden.

Das Bildmuster kann während der Bewegung der Filterbereiche zum Detektor ruhend bleiben, sodass die Filterbereiche relativ zum Detektor bewegt werden. Ebenfalls möglich ist es, das Bild über den Detektor zu bewegen, sodass die Filterbereiche relativ zum Detektor ruhen. Die Bewegung des Bilds über den Detektor kann mit Hilfe einer Bewegung des optischen Systems oder eines Teils des optischen Systems relativ zum Detektor erfolgen. Eine weitere Möglichkeit besteht im Bewegen des Filters und des Detektors relativ zum optischen System, das beispielsweise relativ zu einem Kameragehäuse ruht. Allgemein gesprochen kann eines oder zwei der drei Elemente aus Detektor, Lichtfilter und optischen System jeweils ruhend zu beispielsweise einem Kameragehäuse gehalten werden, wohingegen die verbleibenden zwei oder das verbleibende eine Element relativ zu den anderen Elementen beweglich sind.

Vorteilhafterweise ist das optische System Teil eines Mikroskops, dessen Gehäuse fest mit einem Probentisch verbunden ist, auf dem der Gegenstand in Form einer Probe bewegt werden kann, z.B. auf einem beweglichen Tablett, insbesondere mit Hilfe eines motorischen Antriebs und einer Positionssteuerung durch ein Steuermittel.

Vorteilhafterweise wird der Gegenstand relativ zum optischen System und Lichtfilter bewegt und der Gegenstand wird in mehreren Aufnahmen jeweils bildabschnittsweise aufgenommen, wobei die Lage der Filterbereiche in den Bildabschnitten jeweils unverändert ist. Das optische System kann hierbei in einem Gehäuse, beispielsweise des Mikroskops, ruhen und der Gegenstand und mit ihm das Lichtmuster des Gegenstands wird am optischen System vorbeigeführt, wobei die Bildabschnitte und mit ihnen die Filterbereiche über das Gesamtbild wanndern.

Ist beispielsweise der Gegenstand länglich, beispielsweise in Form einer Reihe von Proben, so kann durch eine Vielzahl von hintereinander aufgenommenen Bildbereichen der gesamte Gegenstand aufgenommen werden, wobei jeder Bildpunkt des Gegenstands in vielen Farben oder in jeder Farbe bzw. durch jeden Filterbereich aufgenommen wurde. Auf diese Weise kann sehr zügig ein Farbbild des gesamten Gegenstands aufgenommen werden. Auf eine Bewegung des Farbfilters relativ zum optischen System oder zum Detektor kann verzichtet werden. Da eine Vorrichtung zum Aufnehmen von Bildern von Proben häufig über einen Aktuator zur gesteuerten Bewegung der Proben entlang der Aufnahmevorrichtung, beispielsweise des Mikroskops, geführt wird, kann die Aufnahmevorrichtung hierdurch besonders einfach gehalten bleiben.

Zweckmäßigerweise sind die Filterbereiche als Streifen ausgeführt, die von einer Bildseite zur gegenüberliegenden Bildseite reichen und in ihrer Längsrichtung senkrecht zur Bewegungsrichtung ausgerichtet sind. Auch ein Erstrecken von einer Bildabschnittsseite zur gegenüberliegenden Bildabschnittsseite ist ausreichend. Hierdurch kann jeder Bildpunkt des Gegenstands besonders einfach über alle Filterbereiche des Lichtfilters geführt werden.

Vorteilhafterweise ist die Bewegung derart, dass ein Bildpunkt von einer Aufnahme zur nächsten Aufnahme um die Breite eines Filterbereichs bewegt wird. Die Breite beträgt jeweils zweckmäßigerweise mehrere Pixel. Ein kleiner Überlappungsbereich, z.B. entsprechend der doppelten Genauigkeit des bewegenden Aktuators, ist hierbei sinnvoll.

Um eine besonders hohe Auflösung zu erreichen, insbesondere bei besonders interessierenden Bildabschnitten, ist es vorteilhaft, wenn die Bewegung von einer Bildaufnahme zur nächsten Bildaufnahme weniger als ein Bildpixel beträgt. Durch die Bewegung im Subpixelbereich kann eine Subpixelauflösung errechnet werden.

Die Vorgabe der Bewegung wird vorteilhafterweise von einem Steuermittel vorgegeben, das insbesondere selbständig besonders interessierende Bildbereiche erkennt und eine Subpixelbewegung triggert. Die Bewegung kann in verschiedenen Modi ausgeführt werden, z.B. einem Subpixelmodus, einem Filterbereichsbreiten-Modus, bei dem die Bewegung von einer zu nächsten Aufnahme die Breite eines Filterbereichs beträgt, oder eines Multipixel-Modus bei dem die Bewegung mehrere Pixel des Detektors beträgt. Auch eine Steuerung von nur zwei der drei beschriebenen Modi ist möglich.

In einer vorteilhaften Ausführungsform der Erfindung ist der Lichtfilter ein Kantenfilter, dessen Kantenfrequenz im räumlichen Verlauf des Lichtfilters senkrecht zur Kante und insbesondere senkrecht zur Bewegung variiert. Auf diese Weise kann durch die Steuerung der Bewegungsschrittweite von einer Aufnahme zur nächsten Aufnahme die Farbauflösung eines Gesamtbilds aus den Aufnahmen gesteuert werden. Der Lichtfilter ist zweckmäßigerweise mit einem Aktuator und einem Streuermittel verbunden, das zur Steuerung einer Bewegung des Lichtfilters dient.

Außerdem wird vorgeschlagen, dass der Lichtfilter zwei im Strahlengang der Abbildung hintereinander angeordnete Kantenfilter umfasst, deren Kantenfrequenz im räumlichen Verlauf der Kantenfilter jeweils senkrecht zur Kante - und insbesondere senkrecht zur Bewegung - variiert mit zueinander entgegengesetztem Frequenzverlauf. Hierdurch kann - bei entsprechender Anordnung der Kantenfilter zueinander - ein räumliches Transmissionsfenster erzeugt werden, das durch eine Bewegung der Kantenfilter zueinander sowohl räumlich als auch spektral vergrößert und verkleinert werden kann. Hierdurch kann eine hohe Variabilität in Frequenz und Raumbereich der aufgenommenen Bilder erreicht werden.

Eine besonders gute spektrale Anpassung von Detektor und Lichtfilter kann erreicht werden, wenn der Detektor mehrere in der Farbempfindlichkeit verschiedene, jeweils in einem Farbbereich sensitive Detektorbereiche aufweist und vor jedem Detektorbereich zumindest jeweils ein Filterbereich angeordnet ist. Dieser ist vorteilhafterweise in seinem Farbbereich an den Farbbereich des Detektors angepasst, sodass die Farbbereiche des Lichtfilters verschieden sind. Die Anpassung erfolgt vorteilhafterweise, indem die Transmission des Filterbereichs im Empfindlichkeitsbereich des entsprechenden Detektorbereichs liegt und in einem Farbbereich eines der anderen Detektorbereiche nicht liegt.

Die verschiedenen Detektorbereiche können räumlich direkt nebeneinander angeordnet sein, beispielsweise in einer zusammenhängenden Matrix von Detektorelementen, oder räumlich getrennt voneinander aufgestellt werden, sodass das optische System ein oder mehrere Elemente zum Lenken der Abbildung des Gegenstands auf mehrere Detektorbereiche umfasst, beispielsweise einen dichroitischen Spiegel oder dergleichen. Die Detektorbereiche werden vorteilhafterweise synchron betrieben, sodass ein Abbild des Gegenstands auf den Detektorbereichen in mehreren Farbkanälen gleichzeitig aufgenommen wird.

Eine weitere vorteilhafte Ausführungsform der Erfindung sieht vor, dass die Filterbereiche unterschiedliche Tranemissionswerte aufweisen und die Transmissionswerte an eine Aufnahmecharakteristik des Detektors jeweils angepasst sind, insbesondere zum Erzielen einer gleichmäßigen Bildbelichtung bei einer unkonstanten spektralen Empfindlichkeit der Detektorelemente. Auf diese Weise kann ein besonders gutes Bildergebnis erzielt werden. Die Anpassung kann durch eine unterschiedliche Größe der Filterbereiche erfolgen. Eine weitere Möglichkeit besteht in der Anpassung einer unterschiedlichen Frequenztransmissionsbreite der Filterbereiche an den Detektor. So kann eine Frequenztransmissionsbreite in einem Frequenzbereich, in dem der Detektor weniger empfindlich ist, größer sein und in einem Frequenzbereich, in dem der Detektor empfindlicher ist, kleiner sein.

Außerdem ist es möglich, die Transmissionsstärke, also eine Dämpfung des Filterbereichs, an den Detektor anzupassen, sodass eine höhere Dämpfung gewählt wird in einem Frequenzbereich, indem der Detektor empfindlicher ist als in anderen Frequenzbereichen.

Ebenfalls eine hohe Bildgüte kann erreicht werden, wenn die Filterbereiche unterschiedliche Transmissionswerte aufweisen und eine Ansteuerung der Detektorelemente an einen Transmissionswert des ihn beschattenden Filterbereichs angepasst ist. So kann eine Verstärkung angehoben, eine Integrationszeit verlängert oder Pixel zusammengelegt werden, wenn ein Filterbereich eine hohe Dämpfung aufweist gegenüber einem anderen Filterbereich. Es kann hierdurch eine gleichmäßige Belichtung des Bilds in allen Frequenzbereichen erreicht werden. Ist der Transmissionswert eines Filterbereichs besonders hoch, ist es auch möglich, nur jedes zweite Pixel auszulesen.

Vorteilhafterweise folgt die unterschiedliche Ansteuerung der Detektorelemente einer Bewegung der Filterbereiche über den Detektor nach. Wird beispielsweise der Lichtfilter über den Detektor bewegt, so kann diese Bewegung erfasst werden, sodass jedem Filterbereich die Detektorelemente zugeordnet werden können, die durch den Bereich abgedeckt werden. Die Steuerung der Detektorelemente kann hierdurch pixelweise an den jeweils zugeordneten Filterbereich angepasst werden.

Die Erfindung ist außerdem gerichtet auf eine Vorrichtung zum Aufnehmen eines Bilds eines Gegenstands mit einem Detektor, der mehrere Detektorelemente umfasst, einem optischen System zum Abbilden des Gegenstands auf den Detektor und einem Lichtfilter mit mehreren unterschiedlich filternden Filterbereichen.

Besonders hoch aufgelöste Farbaufnahmen können durchgeführt werden, wenn der Lichtfilter so angeordnet ist, dass mehrere durch die Filterbereiche unterschiedlich gefilterte Bildbereiche des Bilds des Gegenstands gleichzeitig auf dem Detektor abgebildet werden.

Die Vorrichtung umfasst ein Steuermittel, das vorteilhafterweise dazu vorgesehen ist, einen, mehrere oder alle der oben genannten Verfahrensschritte zu steuern.

Die Erfindung wird anhand von Ausführungsbeispielen näher erläutert, die in den Zeichnungen dargestellt sind.

Es zeigen:
- Fig. 1: ein Mikroskop mit einer Autofokusvorrichtung in einer schematischen Darstellung,
- Fig. 2: einen schematisiert dargestellten Strahlengang bzw. Beleuchtungspfade der Autofokuseinrichtung auf eine Probe,
- Fig. 3 - Fig. 6: Reflexionsstrahlengänge bzw. Detektionspfade von der Probe auf zwei Detektorelemente,
- Fig. 7: ein Diagramm von Signalen der Detektorelemente und eines veränderten Arbeitsabstands über die Zeit,
- Fig. 8: ein schematisiertes Diagramm der Signale mit einem Differenzsignal,
- Fig. 9: eine Projektion eines Lichtpunkts auf eine bewegte schiefe Probe,
- Fig. 10: eine Projektion eines Lichtquellenmusters auf eine ruhende schiefe Probe,
- Fig. 11: eine Auftrennung eines Strahlengangs durch einen halbdurchlässigen Spiegel,
- Fig. 12: eine Auftrennung eines Strahlengangs durch einen dichroidischen Spiegel,
- Fig. 13: eine schematische Darstellung eines auf eine Probe gerichteten Mikroskops mit einer Kamera mit einem Lichtfilter auf einem Detektor,
- Fig. 14: ein Strahlengang von einer Probe auf drei Detektoren,
- Fig. 15 - Fig. 18: einen Detektor mit einem Lichtfilter in vier verschiedenen Lagen zu einer Probe,
- Fig. 19: ein Schema eines Kantenfilter mit einer in der Filterfläche kontinuierlich wandernder Kante,
- Fig. 20: ein Transmissionsdiagramm resultierend aus zwei hintereinander angeordneten Kantenfiltern und
- Fig. 21: ein Empfindlichkeitsdiagramm eines Detektors.

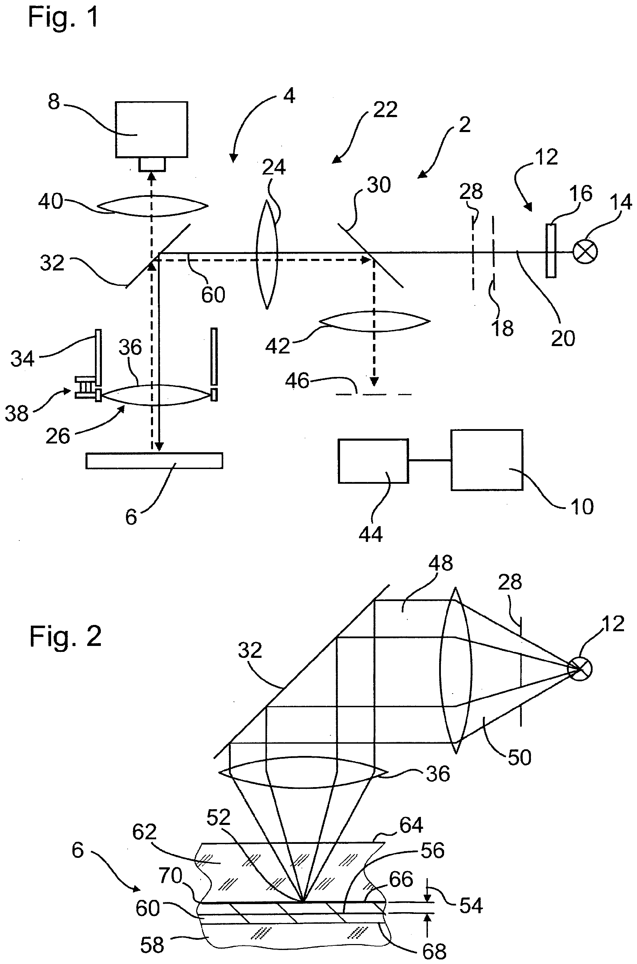

Fig. 1 zeigt eine Autofokusvorrichtung 2, die in ein optisches Abbildungssystem 4 integriert ist. Das optische Abbildungssystem ist in dieser speziellen Ausführungsform ein Mikroskop zur Fluoreszenzanalyse von biologischem Material in einer Probe 6. Hierzu umfasst das optische Abbildungssystem 4 einen Bilddetektor 8 bzw. eine Kamera, der mit einem Steuermittel 10 zur Aufnahmesteuerung und Speichern aufgenommener Bilder verbunden ist, oder ein Okular zur direkten Beobachtung der Probe. Das Steuermittel 10 ist Teil sowohl des optischen Abbildungssystems 4 als auch der Autofokusvorrichtung 2 und dient zur Steuerung des im Folgenden beschriebenen Autofokusverfahrens.

Die Autofokusvorrichtung 2 umfasst eine Lichtquelle 12, die Licht für das Autofokusverfahren zur Verfügung stellt. Sie kann auch das Licht für die Fluoreszenzanalyse zur Verfügung stellen, wobei es in der Regel zweckmäßiger sein wird, dass das optische Abbildungssystem 4 hierfür eine andere, nicht dargestellte Lichtquelle umfasst. Die Lichtquelle 12 weist einen Lichterzeuger 14 auf, z.B. eine LED (Light Emitting Diode), und eine Optik 16 zum Formen des abgestrahlten Lichts, die einen Lichtdiffusor umfassen kann. Eine Blende 18 mit einem Öffnungsmuster erzeugt ein ein- oder zweidimensionales Lichtqüellenmuster, das zweckmäßigerweise symmetrisch zu einer optischen Achse 20 eines optischen Systems 22 ist, das neben der Optik 16 weitere optische Elemente 24 und ein Objektiv 26 des optischen Abbildungssystems 4 umfassen kann. Eine räumlich definierte Lichtquelle kann auch die Elemente 16 und 18 ersetzen. Ein Mittel 28, das einer Apertur gleichkommt, trennt die Beleuchtung der Probe 6 aus der Lichtquelle 12 in mehrere Lichtpfade auf, die getrennt voneinander vom Mittel 28 zur Probe 6 verlaufen und in der Probe 6 in einen gemeinsamen Messlichtfokus gebracht werden (Beleuchtungspfade). Das Mittel 28 kann alternativ im Detektionspfad (s. unten) zwischen Elementen 30 und 46 angebracht sein, insbesondere bei Fokussierung auf streuende Objekte.

Über zwei Strahlteiler 30, 32 in Form von dichroidischen oder halbdurchlässigen Spiegeln wird Licht aus der Lichtquelle 12 in das Objektiv 26 des optischen Abbildungssystems 4 gelenkt, das in einem Mikroskopgehäuse 34 gelagert ist und das Licht auf die Probe 6 fokussiert. Hierzu umfasst das Objektiv 26 ein optisches Element 36, z.B. eine Linse, die mittels eines Aktuators 38 entlang der optischen Achse 20 des Objektivs 26 steuerbar beweglich ist. Die Steuerung der Position des optischen Elements 36 und damit des Fokus in der Probe 6 wird durch das Steuermittel 10 vorgenommen. Der Aktuator selbst kann einen unabhängigen Abstandsmesser umfassen.

Von der Probe 6 reflektiertes Licht durchtritt das Objektiv 26 in entgegengesetzter Richtung, wie durch einen gestrichelten Pfeil angedeutet ist, und wird über den Strahlteiler 32 einerseits in eine Optik 40 und in den Bilddetektor 8 und andererseits über den Strahlteiler 30 und eine weitere Optik 42 zu einem Detektor 44 geleitet, der mehrere Detektorelemente umfasst (Detektionspfad). Die Detektorelemente können einzelne Sensoren, z.B. Fotodioden, sein oder ein Gitter von Sensoren. Vor dem Detektor 44 ist eine Blende des optischen Systems 22 mit einer Blendenöffnung 46 angeordnet, die entsprechend der Blendenöffnung der Blende 18 geformt ist und in der Bildebene des optischen Systems 22 angeordnet ist, in der ein Bild der Probe 6 und damit des in der Probe 6 abgebildeten des Lichtquellenmusters erzeugt ist. Die Blenden-Öffnung 46 kann eine oder mehrere Öffnungen umfassen und wird im Folgenden nur als Blendenöffnung 46 bezeichnet. Der Detektor 44 liefert seine Signale an das Steuermittel 10, das diese auswertet und als Steuer- oder Regeleingang für eine Steuerung des Aktuators 38 verwendet. Das Steuermittel kann außerdem das unabhängige Abstandssignal des Aktuators 38 verarbeiten und wahlweise zur Regelung nutzen.

Fig. 2 zeigt einen schematisiert dargestellten Strahlengang (Beleuchtungspfad) der Autofokuseinrichtung 2 in zwei Lichtpfaden 48, 50 auf die Probe 6. In diesem Ausführungsbeispiel ist das Lichtmuster der Lichtquelle 12 auf einen Lichtpunkt reduziert, der durch zwei Öffnungen des Mittels 28 zum Auftrennen in die Lichtpfade 48, 50 hindurchstrahlt. Bei einer Blende 18, die beispielsweise zwei Lichtpunkte erzeugt, wie in Fig. 1 dargestellt, wird Licht aus jedem Lichtpunkt in zwei Lichtpfade 48, 50 aufgeteilt, wie durch das Mittel 28 in Fig. 1 angedeutet ist.

Licht aus beiden Lichtpfaden 48, 50 wird in einem punktförmigen Messlichtfokus 52 in der Probe 6 fokussiert, der die Form der Lichtquelle haben kann und z.B. punktförmig ist, entsprechend einer schlitzförmigen Lichtquelle länglich ist oder eine beliebige andere Form hat. Da sowohl für das Messlicht aus der Lichtquelle 12 als auch das Licht für die Probenuntersuchung durch das Objektiv 26 geführt wird, kann der Messlichtfokus 52 im Fokus der Kamera bzw. des optischen Abbildungssystems 4 liegen, der eine Fokusebene sein kann. Es ist jedoch auch möglich, dass der Messlichtfokus 52 um eine vorbekannte Abstand 54 von einem Fokus 56 der Kamera entfernt ist.

Die typische Probe 6 umfasst einen Probenträger 58, auf den biologisches Probenmaterial 60 aufgebracht ist, das mit einem dünnen transparenten Deckglas 62 abgedeckt ist. Diese Probe 6 reflektiert einfallendes Licht an drei Grenzflächen 64, 66, 68, nämlich der stark reflektierenden Luft-Glas-Grenzfläche 64, an der deutlich weniger stark reflektierenden Glas-Probenmaterial-Grenzfläche 66 und an der im Folgenden nicht weiter betrachteten Probenmaterial-Glas-Grenzfläche 68, wobei bei sehr dünnen Probenmaterialien die Signale eine Kombination aus den Grenzflächen 66 und 68 entsteht. Die Glas-Probenmaterial-Grenzfläche 66 bildet hierbei eine in diesem ersten Ausführungsbeispiel beschriebene Fokuszielebene 70, in die der Messlichtfokus 52 durch das Autofokusverfahren geführt werden soll.

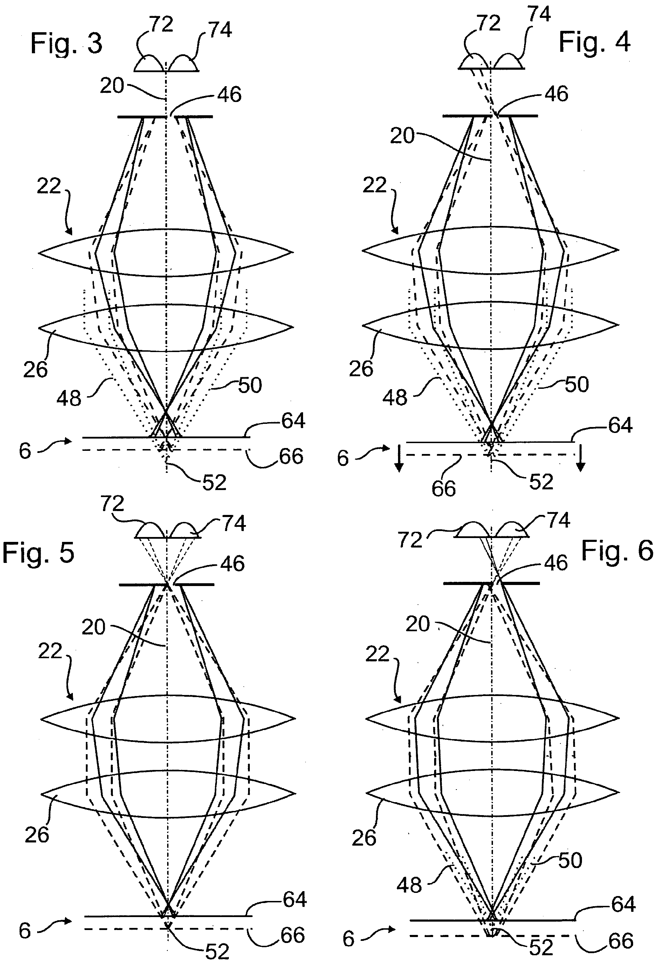

Das hierzu durchgeführte Autofokusverfahren wird anhand der Figuren 3 - 8 beschrieben. Die Figuren 3-6 zeigen das optische System 22 und das Objektiv 26 stark vereinfacht über der Probe 6, die nur anhand der Grenzflächen 64, 66 angedeutet ist. Der Detektor 44 ist anhand zweier Detektorelemente 72, 74 dargestellt, die beidseitig der optischen Achse 20 angeordnet sind. Bei einer Anordnung wie in Fig. 1 mit zwei Punktlichtquellen wären vier Detektorelemente vorhanden. Die Blendenöffnung 46 vor dem Detektor 44 ist zweckmäßigerweise formgleich mit der Lichtquelle, also punkt- bzw. kreisförmig in diesem Ausführungsbeispiel. Sie ist so angeordnet, dass sie unsymmetrisch versetzt zur optischen Achse 20 zu liegen kommt, wobei die Achse 20 außerhalb der Blendenöffnung 46 liegt, sie also nicht durchtritt.

Die beiden Lichtpfade 48, 50 sind in ihrem auf die Probe 6 einfallenden Teil dünn punktiert dargestellt und auf den Messlichtfokus 52 gerichtet, der im Probenträger 58 liegt, also unterhalb der Fokuszielebene 70, die identisch mit der Grenzfläche 66 ist. Die verschiedenen Lichtwege von den verschiedenen Grenzflächen 64, 66 zur Blendenöffnung 46 bzw. zu den Detektorelementen 72, 74 sind unterschiedlich dargestellt. Der Lichtweg des von der stark reflektierenden Grenzfläche 64 reflektierten Hauptreflexes ist in durchgezogenen Linien dargestellt und der Lichtweg des von der weniger stark reflektierenden Grenzfläche 66 reflektierten Lichts in gestrichelten Linien. Es ist ersichtlich, dass zum einen im Messlichtfokus 52 kein oder vernachlässigbar wenig Licht reflektiert wird und zum anderen das von den Grenzflächen 64, 66 reflektierte Licht die Blendenöffnung 46 verfehlt, so dass kein Licht aus ihm zu den Detektorelementen 72, 74 gelangt.

In Fig. 4 ist die Probe 6 im Vergleich zur Abbildung in Fig. 3 nach unten bewegt, wie durch Pfeile angedeutet ist, so dass der Messlichtfokus 52 relativ zur Probe 6 nach oben bewegt wurde. Die Bewegung der Probe 6 ist äquivalent zur Bewegung des Objektivs 26 anhand des Aktuators 38. Bei der in Fig. 4 dargestellten Stellung der Probe 6 zum Objektiv 26 liegt der Messlichtfokus 52 knapp unterhalb der Grenzfläche 66. Durch die Asymmetrie der Blendenöffnung 46 zur optischen Achse 20 tritt bei dieser Position reflektiertes Licht aus dem Lichtpfad 48 durch die Blendenöffnung 46 und fällt auf das Detektorelement 72, wohingegen Licht vom Lichtpfad 50 die Blendenöffnung 46 verfehlt, so dass das Detektorelement 74 abgeschattet bleibt.

Bei einer weiteren Bewegung der Probe 6 nach unten oder des Messlichtfokus 52 in der Probe 6 nach oben erreicht der Messlichtfokus 52 die Grenzschicht 66 und Fokuszielebene 70, wie in Fig. 5 dargestellt ist. Die Reflexionen beider Lichtpfade 48, 50 kreuzen sich in der Bildebene, in der die Blende und die Blendenöffnung 46 angeordnet sind. Durch die asymmetrische Blendenöffnung 46 außerhalb der optischen Achse 20 werden beide Lichtpfade 48, 50 weitgehend abgeschattet, jedoch nicht vollständig wegen der flächigen Apertur der Lichtpfade 48, 50. Beide Detektorelemente 72, 74 empfangen jeweils etwas und gleich viel Licht und senden ein gleiches Signal an das Steuermittel 10.

Fig. 6 zeigt die Lichtpfade 48, 50 bei einer noch weiteren Bewegung der Probe 6 nach unten oder des Messlichtfokus 52 in der Probe 6 nach oben. Der Messlichtfokus 52 verlässt die Grenzschicht 66 und nähert sich der Grenzschicht 64, so dass die Reflexion der Grenzschicht 66, die nur noch das Detektorelement 74 erreicht, immer weiter abgeschattet wird und die Reflexion der Grenzschicht 64 immer stärker durch die Blendenöffnung 46 auf das Detektorelement 72 fällt.

Die Blendenöffnung 46 ist in der Bildebene des Objektivs 26 angeordnet. Aus dem Messlichtfokus 52 reflektiertes Licht tritt durch die Blendenöffnung 46 hindurch und zwar zweckmäßigerweise gleich stark aus beiden Lichtpfaden 48, 50. Die Blendenöffnung 46 ist hierbei so angeordnet, dass Licht, das von oberhalb oder unterhalb des Messlichtfokus 52 reflektiert wird, ungleich stark aus den beiden Lichtpfaden 48, 50 durch die Blendenöffnung 46 tritt. Eine gleich starke Beleuchtung der Detektorelemente 72, 74 bedeutet somit, dass eine der Grenzschichten 64, 66 im Messlichtfokus liegt. Die Blendenöffnung ist hierbei vorteilhafterweise nur so groß, dass Licht aus einer Grenzschicht 64, 66, die weiter als 100 *µ*m vom Messlichtfokus 52 entfernt ist, aus keinem der Lichtpfade 48, 50 durch die Blendenöffnung 46 treten kann.

Durch die Blendenöffnung 46 wird eine Selektion des Lichts aus unterschiedlichen Lichtwegen nach optischer Weglänge ermöglicht. Ebenfalls wird eine Selektion des Lichts aus unterschiedlichen Lichtwegen nach ihrer unterschiedlichen Richtung auf die Detektorelemente 72, 74 zu ermöglicht.

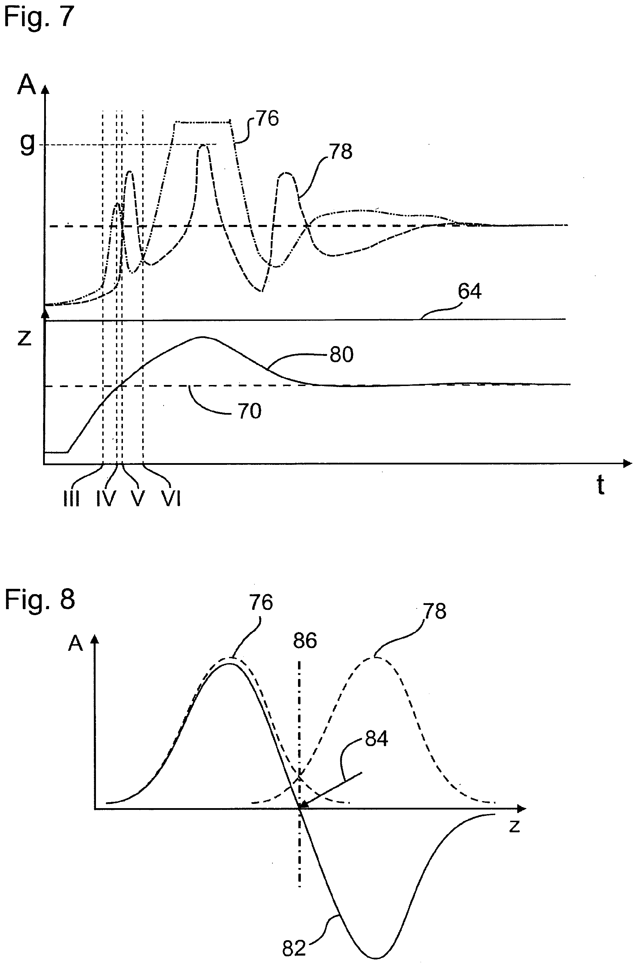

In Fig. 7 sind die Amplituden A des Signals 76 des Detektorelements 72 und des Signals 78 des Detektorelements 74 bei einer Bewegung des Messlichtfokus 52 in der Probe 6 wie zu den Figuren 3 - 6 beschrieben über die Zeit t dargestellt. Außerdem ist die Bewegung der Position 80 des Messlichtfokus 52 in z-Richtung, die parallel zur optischen Achse 20 des Objektivs 26 ist, über die Zeit t korrelierend zu den Signalen 76, 78 dargestellt. Vier Zeitpunkte III, IV, V, VI sind markiert, die den Positionen 80 des Messlichtfokus 52 in den Figuren 3, 4, 5, 6 entsprechen.

Zum automatischen Fokussieren der Probe 6 wird zunächst der Lichterzeuger 14 der Autofokus-Lichtquelle 12 eingeschaltet und das Objektiv 26 bzw. deren durch den Aktuator 38 bewegliches optisches Element 36 in ihre Ausgangsstellung - in den Figuren in Richtung der Probe 6 ganz nach unten - bewegt, damit der Messlichtfokus 52 innerhalb der Probe 6 liegt und dort zweckmäßigerweise innerhalb des Probenträgers 58.

Nun wird der Aktuator 38 so bewegt, dass der Messlichtfokus 52 ganz durch das Probenmaterial 60 und durch die Fokuszielebene 70 hindurchbewegt wird. Gleichzeitig werden kontinuierlich die Signale 76, 78 der Detektorelemente 72, 74 und zweckmäßigerweise auch ein Positionssignal des Aktuators 38 aufgenommen. Zunächst steigt das Signal 76 des Detektorelements 72 an, um schnell wieder abzufallen. Dann steigt das Signal 78 des Detektorelements 74 an und fällt ebenfalls wieder ab, beide entsprechend des Lichteinfalls durch die Blendenöffnung 46 wie zu den Figuren 4 - 6 beschrieben.

Insbesondere wird die Position des Schnittpunkts der Flanken der Signale 76, 78 - im Folgenden Zielposition - aufgenommen, in der der Messlichtfokus 52 in der Fokuszielebene 70 liegt. Diese Zielposition wird durch das Steuermittel 10 erfasst, das mit dem Aktuator 38 verbunden ist, der seine Position bzw. die des optischen Elements 36 ständig oder auf Anfrage des Steuermittels 10 an das Steuermittel 10 gibt.

Das erneute starke Ansteigen erst des Signals 76 und dann des Signals 78 über einen Grenzwert g wird als Zeichen und Orientierung dafür genommen, dass sich der Messlichtfokus 52 der stark reflektierenden Grenzfläche 64 nähert und somit oberhalb der Fokuszielebene 70 liegt. Das Bewegen des Messlichtfokus 52 nach oben wird gestoppt.

Nun kann in einem einfachen Verfahrensschritt der Aktuator 38 entsprechend der erfassten Zielposition eingestellt werden und die Probe 6 ist sehr zügig fokussiert. Der Messlichtfokus 52 ist auf die Fokuszielebene 70 eingestellt und damit auch der Fokus des Mikroskops 4, wenn der Messlichtfokus 52 in diesem Fokus liegt. Ansonsten ist der Fokus auf eine gewünscht Ebene eingestellt, die um eine bekannte Strecke von der Fokuszielebene 70 entfernt ist.

Eine genauere Fokussierung wird erreicht, wenn die Bewegung des Messlichtfokus 52 umgekehrt wird und der Messlichtfokus 52 diesmal langsamer in das Probenmaterial 60 hineingeführt wird, wie in Fig. 7 dargestellt ist. Es bildet sich wieder das Maximum des Signals 76, und ein Einstellen der Signale 76, 78 auf Signalgleichheit führt den Messlichtfokus 52 in die Fokuszielebene 70.

In einem alternativen Verfahren kann so begonnen werden, dass der Messlichtfokus 52 oberhalb der Probe 6 liegt und von dort in die Probe 6 eingefahren wird. Der zuerst auftretende Hauptreflex aus der Glas-Luft-Grenzschicht 64 wird deutlich erkannt. Da die Dicke des Deckglas 62 bekannt ist, z.B. 170 *µ*m, kann der Messlichtfokus 52 zügig um diese oder eine etwas kleinere Strecke nach unten verfahren werden. Dann kann die Verfahrgeschwindigkeit verringert werden und der Messlichtfokus 52 so lange weiter nach unten verfahren werden, bis die Signale 76, 78 gleich stark sind.

Eine Regelung auf die Zielposition anhand der Signale 76, 78 ist im Folgenden anhand Fig. 8 erläutert. Es wird ein Differenzsignal 82 aus der Differenz zwischen den Signalen 76, 78 gebildet, z.B. durch Subtraktion der Signale 76, 78, und als Regelgröße verwendet mit dem Nulldurchgang 84 als Regelzielwert. Im Nulldurchgang 84 liegt der Messlichtfokus 52 in der Zielposition 86. Vorteilhafterweise ist der Detektor 44 hierzu so kalibriert, dass die Signale 75, 78 gleich sind, wenn der Messlichtfokus 52 in der Fokuszielebene 70 liegt. Soll der Messlichtfokus 52 etwas außerhalb der reflektierenden Grenzschicht 66 liegen, so kann ein Offset auf ein Signal 76, 78 gegeben oder ein Signal 76, 78 mehr oder weniger verstärkt werden. Hierdurch verschiebt sich der Nulldurchgang 84 entsprechend in z-Richtung. Ist die Relation von Offset oder Verstärkung zur Verschiebung bekannt, so kann die Fokuszielebene 70 entsprechend um die Grenzfläche 66 herum eingestellt werden, ohne dass das zu den Figuren 7 und 8 geschilderte Autofokusverfahren geändert werden muss. Die entsprechende Einstellung des Detektors 44 kann als Kalibrierung vor einem Autofokusverfahren durchgeführt werden oder während des Autofokusverfahrens auf entsprechende Anweisung des Steuermittels 10.

Nach dem Einstellen oder Einregeln der Fokusposition kann der Lichterzeuger 14 ausgeschaltet und die Fokusposition mittels des Positionssignals des Aktuators 38 geregelt oder gehalten werden. Dies hat den Vorteil, dass das Autofokus-Lichtmuster während der Belichtung nicht mit der Kamera abgebildet wird. Optional kann der Lichterzeuger 14 kontinuierlich eingeschaltet bleiben und die Regelung nach dem Differenzsignal 82 durchgeführt werden.

Nun können Bilder der Probe 6 bzw. des Probenmaterials 60 aufgenommen werden, ggf. an mehreren z-Positionen. Diese können durch eine entsprechende Steuerung des Aktuators 38 angefahren werden. Es ist auch möglich, diese durch eine Signalverschiebung eines oder beider Signale 76, 78 zu erreichen.

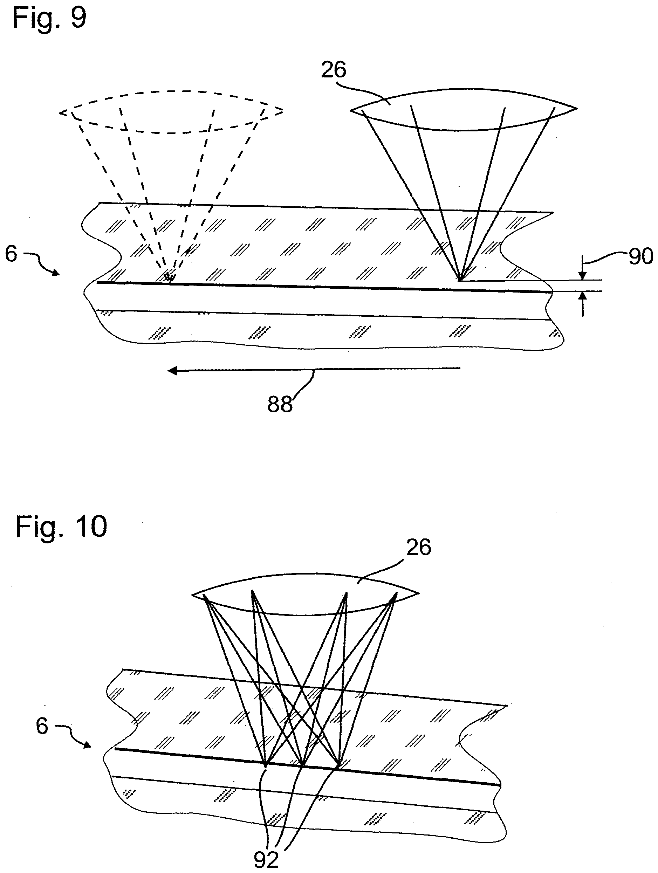

Zur Aufnahme mehrerer Bilder einer großen Probe 6 wird diese in x-y-Richtung 88, also senkrecht zur s-Achse bzw. optischen Achse 20 bewegt, wie in Fig. 9 angedeutet ist. Die Fokussierung kann hierbei erhalten bleiben. Ist die Probe 6 jedoch schief, verrutscht der Messlichtfokus 52 um eine Strecke 90 in z-Richtung innerhalb der Probe 6. Um dies zu erkennen, werden die Signale 76, 78 an der neuen x-y-Position auf Plausibilität überprüft. Falls die Signale 76, 78 nicht der Erwartung entsprechen, also außerhalb von Grenzwerten liegen, wird das grobe Finden der Fokuszielebene 70 eingeleitet, wie zu Fig. 7 beschrieben ist. Sind die Signale 76, 78 akzeptabel kann direkt mit der Regelung begonnen werden, z.B. auf den Nulldurchgang 84.

Fig. 10 zeigt eine Projektion eines Lichtquellenmusters auf eine ruhende, schiefe Probe 6. Anhand eines einzigen Autofokus-Lichtpunkts kann nicht erkannt werden, ob die Probe 6 relativ zur optischen Achse 20 schief ist. Umfasst jedoch der Messlichtfokus 52 mehrere Fokuspunkte 92, z.B. indem ein Lichtmuster an mehreren Fokuspunkten 92 in der Probe abgebildet wird, können Reflexionen aus jedem Fokuspunkt 92 über jeweils zumindest zwei Lichtpfade getrennt ausgewertet werden, wie oben beschrieben wurde. Auf diese Weise kann erkannt werden, dass die jeweils gefundenen Fokuszielebenen zu den einzelnen Fokuspunkten 92 nicht identisch sind. Es kann ein Fehlersignal ausgegeben werden, so dass die Probe 6 erneut und gerade in ihre Halterung eingesetzt wird.

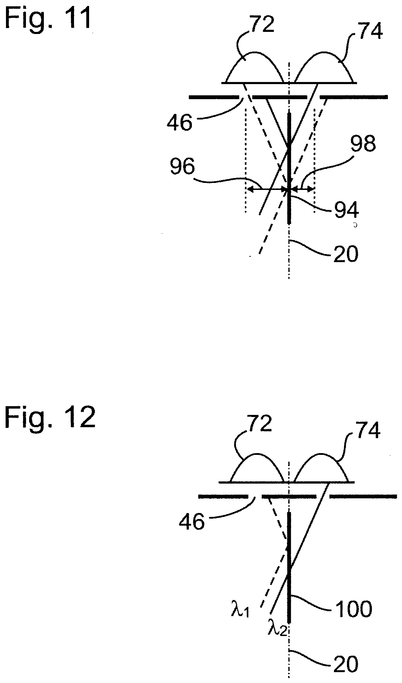

Fig. 11 und Fig. 12 zeigen alternative Detektionsschemen, die zwei im optischen System 22 räumlich nicht getrennte optische Pfade nutzen. In Fig. 11 wird ein Strahl im Detektionspfad erst nach dem optischen System 22 und vor den Detektoren 72, 74 mittels eines halbdurchlässigen Spiegels 94 getrennt. Mittels zweier Blendenöffnungen 46, die asymmetrisch zum Spiegel 94 vor den Detektoren 72, 74 angeordnet sind, wird das Abstandssignal der gering unterschiedlichen Wege detektiert. Die Asymmetrie ist durch die unterschiedlichen Abstände 96, 98 der Blendenöffnungen 46 senkrecht zum Spiegel 94 dargestellt.

In Fig. 12 emittiert der Lichterzeuger 14 Strahlung mit zwei unterschiedlichen Frequenzen (λ₁, λ₂), die vor den Detektoren 72, 74 mittels eines dichroidischen Spiegels 200 getrennt werden. Wiederum wird mit Hilfe der Blendenöffnungen 46 das Abstandsignal erzeugt. In diesem Fall können die Blendenöffnungen 46 symmetrisch zum dichroidischen Spiegel 100 angeordnet sein, wenn der Brechungsindex des optischen Systems 22 die Lichtpfade der unterschiedlichen Frequenzen ausreichend räumlich trennt, wie in Fig. 12 durch die Abstände der beiden Lichtpfade vor dem Spiegel 100 dargestellt ist.

Auch in den Ausführungsbeispielen aus Fig. 11 und Fig. 12 wird durch ein optisches Mittel, in diesen Fällen den halbdurchlässigen Spiegel 94 oder dichroitischen Spiegel 100, eine Selektion des Lichts aus unterschiedlichen Lichtwegen nach optischer Weglänge ermöglicht. Ebenfalls wird eine Selektion des Lichts aus unterschiedlichen Lichtwegen nach unterschiedlichen Richtungen zu den Detektorelementen 72, 74 hin ermöglicht.

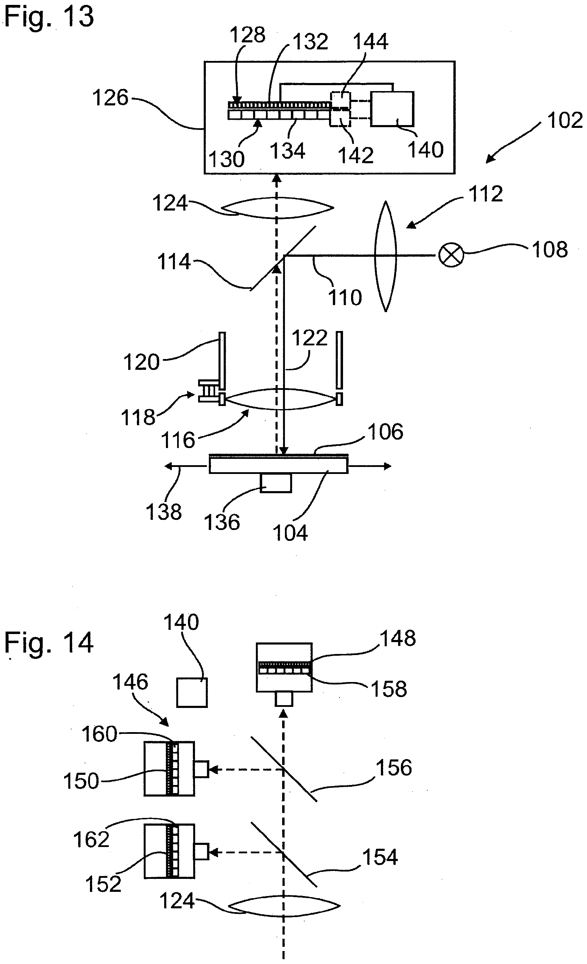

Fig. 13 zeigt eine schematische Darstellung eines z.B. als Mikroskop ausgeführten optischen Abbildungssystems 102, das auf eine auf einem Probentisch 104 liegende Probe 106 gerichtet ist. Das optische Abbildungssystem 102 umfasst eine Lichtquelle 108, deren Lichtstrahlen in einem mit einem durchgezogenen Pfeil 110 angedeuteten Strahlengang mit Hilfe eines optischen Systems 112 und eines dichroitischen Spiegels 114 auf die Probe 106 gerichtet ist. Das optische System 112 schließt ein Objektiv 116 mit ein, das mit Hilfe eines Aktuators 18 relativ zu einem Mikroskopgehäuse 120 entlang der optischen Achse 122 des Strahlengangs zum Fokussieren der Probe 106 verfahrbar ist.

Von der Probe 106 reflektierte oder gestreute Strahlung wird in einem mit einem gestrichelten Pfeil angedeuteten Strahlengang durch den dichroitischen Spiegel 114 und nur angedeutete optische Elemente 124 des optischen Systems 112 in eine Kamera 126 geleitet, die einen Detektor 128 mit einem Lichtfilter 130 aufweist. Der Detektor 128 umfasst eine Vielzahl von in einer zweidimensionalen Matrix angeordneten Detektorelementen 132, die als CCD-Elemente ausgeführt und auf einem Chip befestigt sind. Der Lichtfilter 130 ist ein Spektralfilter mit mehreren spektral unterschiedlich filternden Filterbereichen 134, die ebenfalls auf dem Chip und im Strahlengang unmittelbar vor den Detektorelementen 132 angeordnet sind.

Der Probentische 104 und mit ihm die Probe 106 ist mit Hilfe eines Aktuators 136 senkrecht zur optischen Achse 122 des Objektivs 116 verfahrbar, wie durch Pfeile 138 angedeutet ist, so dass mehrer Aufnahmen der Probe 106 in unterschiedlichen Positionen der Probe 106 zum Mikroskop 102 gemacht werden können. Der Aktuator 136 kann durch ein Steuermittel 140 des Mikroskops 12 so angesteuert werden, das eine Verfahrstrecke der Probe 16 von Aufnahme zu Aufnahme auf einen vorgegebenen oder vom Steuermittel berechneten Wert eingestellt werden kann. Das Steuermittel 140 kann zugleich Steuermittel 140 der Kamera 126 oder ein zusätzliches Steuermittel des Mikroskops 102 außerhalb der Kamera 126 sein.

Durch das Steuermittel 140 kann alternativ oder zusätzlich zum Aktuator 136 ein Aktuator 142 des Lichtfilters 130 und/oder ein Aktuator 144 des Detektors 128 angesteuert werden, so dass die Filterbereiche 134 und/oder die Detektorelemente 132 relativ zum optischen System 112 senkrecht zur optischen Achse 122 des in die Kamera 126 einfallenden Strahlengangs ansteuerbar beweglich sind. Hierdurch kann ein Bild eines Gegenstands der Probe 16 auf eine oder mehrere Arten über Lichtfilter 130 und/oder Detektor 128 wandern.

Eine alternative Ausführungsform eines Detektors 146 mit mehreren Detektorbereichen 148, 150, 12 ist in Fig. 14 dargestellt. Die nachfolgende Beschreibung beschränkt sich im Wesentlichen auf die Unterschiede zum Ausführungsbeispiel aus Fig. 13, auf das bezüglich gleich bleibender Merkmale und Funktionen verwiesen wird. Im Wesentlichen gleich bleibende Bauteile sind grundsätzlich mit den gleichen Bezugszeichen beziffert und nicht erwähnte Merkmale sind übernommen, ohne dass sie erneut beschrieben sind.

Über zwei dichroitische Strahlteiler 154, 156 wird von der Probe 6 reflektierte Strahlung nach drei Spektralbereichen aufgeteilt auf die Detektorbereiche 148, 150, 152 gelenkt. Die Detektorbereiche 148, 150, 152 sind jeweils in nur einem der Spektralbereiche sensitiv oder sensitiver als in den anderen Spektralbereichen. Vor jedem Detektorbereich 148, 150, 152 ist jeweils ein Filterbereich 158, 160, 162 angeordnet, wobei die Filterbereiche 158, 160, 162 nur einem der Spektralbereiche durchlässig oder durchlässiger als in den anderen Spektralbereichen sind. Ihre Durchlässigkeit ist an den ihnen jeweils zugewiesenen Detektorbereich 148, 150, 152 spektral angepasst. Einer oder alle der Filterbereiche 158, 160, 162 können wiederum in jeweils spektral unterschiedlich filternde Unterbereiche aufgeteilt sein kann, wie in Fig. 14 dargestellt ist. Durch die Aufteilung in spektral unterschiedlich empfindliche Detektorbereiche 148, 150, 152 mit jeweils spektral unterschiedlich filternden Filterbereichen 158, 160, 162 kann eine besonders hohe Lichtausbeute über einen weiten Spektralbereich erzielt werden.

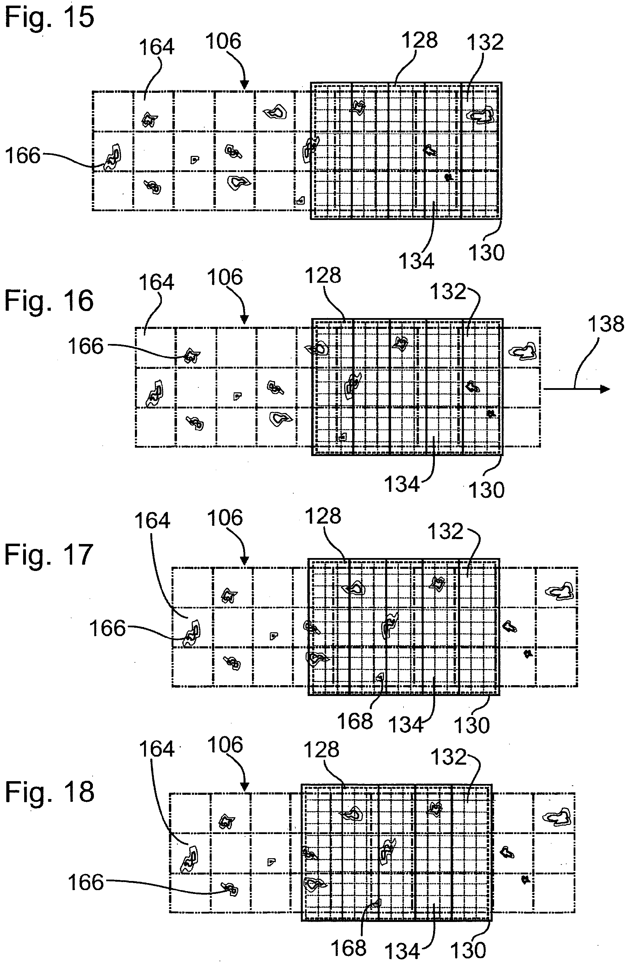

In den Figuren 15 - 18 ist jeweils das Abbild einer Probe 106 dargestellt, die 3 x 10 Probengefäße, die auch Probenflächen darstellen können, 164 aufweist, auch erhebliche größere Zahlen sind denkbar, in denen jeweils gleiche oder unterschiedliche Probensubstanz enthalten ist. Die Probengefäße 164 sind in einer rechteckigen Matrix angeordnet und am Probentisch 104 befestigt. In der Probensubstanz befinden sich zu untersuchende Gegenstände 166. Die Probe 106 zeigt in ihrer Gesamtheit und in ihren Gegenständen ein Bildmuster.

Der Detektor 128 und seine 11 x 15 rechteckigen Detektorelemente 132 sind der Übersichtlichkeit halber mit gestrichelten Linien dargestellt, wohingegen der Lichtfilter 130 mit seinen 5 streifenförmigen Filterbereichen 134 mit durchgezogenen Linien darstellt sind. Die Streifen der Filterbereiche 134 sind senkrecht zur Bewegungsrichtung des Probentischs angeordnet, die durch eine Pfeil 138 dargestellt ist. Zum besseren Unterscheiden der Linien ist das Abbild der Probe strichpunktiert dargestellt.

Fig. 15 zeigt den Detektor 128 und das Abbild der Probe 106 in einer Stellung zueinander, in der eine Aufnahme der Probe 106 gemacht wird, jedoch nicht die erste, wie im Folgenden erläutert ist. Die Aufnahme stellt einen Bildabschnitt mit fünf Bildbereichen dar, in dem zwölf Probengefäße 164 samt Inhalt vollständig und drei Probengefäße 164 nur teilweise abgebildet sind. Jeweils drei Probengefäße 164 werden durch einen Filterbereich 134 und somit in dessen Spektralbereich abgebildet. Durch einen Filterbereich 134 wird jeweils einer von fünf Bildbereichen des Bildabschnitts abgebildet. Jeder Filterbereich 134 und jeder Bildbereich überdeckt hierbei senkrecht zur Bewegungsrichtung der Probe 106 genau drei Detektorelemente 132, allgemeiner: genau eine gleiche Anzahl von Detektorelementen 132.

Für eine nächste Aufnahme wird die das Abbild der Probe 106 um die Strecke der Breite der Filterbereiche 134 weiterbewegt, wobei die Breite in Richtung der Bewegung der Probe 106 zu sehen ist. Es wird nun ein weiterer Bildabschnitt der Probe 106 aufgenommen, wobei dieser Bildabschnitt einen anderen Probenabschnitt und andere Gegenstände 166 abdeckt. Die Lage der Filterbereiche 134 in den Bildabschnitten bleibt gleich, nicht jedoch relativ zu den Probenabschnitten und Gegenständen 166. Mit der zweiten Aufnahme werden die nochmals abgebildeten Probengefäße 164 in einem anderen Spektrum, also in einer anderen Farbe abgebildet.

Fig. 17 zeigt die Probe 106 wiederum um die Breite der Filterbereiche 134 versetzt, so dass die nun dreimal abgebildeten Probengefäße in drei verschiedenen Spektren abgebildet sind. Auf diese Weise werden alle Bereiche der Probe 106 und alle Probengefäße 164 zumindest so oft abgebildet, wie Filterbereiche 134 vorhanden sind, im gezeigten Ausführungsbeispiel zumindest fünf mal, so dass jeder Probenbereich in fünf Spektren aufgenommen ist. Aus diesen fünf Bildern kann für jeden Probenbereich ein fünffarbiges Bild zusammengesetzt werden. Um jeden Probenbereich fünf mal abzubilden wird in der ersten Aufnahme die Probe 106 nur durch einen Filterbereich 134 aufgenommen, in der zweiten Aufnahme durch zwei Filterbereiche 134, und so weiter. Fig. 15 zeigt somit die fünfte Aufnahme der Probe 106.

Die Probe 106 wird in ihrer Gesamtheit abgebildet, indem die Probe 106 bildabschnittsweise auf den Detektor 128 abgebildet wird und mehrere sich teilweise überdeckende Abbildungen von der Probe 106 und den Gegenständen 166 gemacht werden. Hierbei werden mindestens so viele Abbildungen gemacht, wie unterschiedliche Filterabschnitte 134 vorhanden sind. Aus jeweils so vielen sich überdeckenden Abbildungen, wie unterschiedliche Filterabschnitte 134 vorhanden sind, wird jeweils ein Vielfarbbild der Probe 106 bzw. eines Gegenstands 166 erzeugt, z.B. vom Steuermittel 140.

Die Aufnahmen werden hierbei durch ein Auswertemittel ausgewertet, das das Steuermittel 140 sein kann, das mit dem Detektor 128 signaltechnisch verbunden ist. Hierbei wird beispielsweise erkannt, dass ein Gegenstand 168 von besonderer Bedeutung ist und besonders hoch aufgelöst dargestellt werden sollte. Ist diese Aufgabe erkannt, so wird die Probe 106 von einer Aufnahme zur nächsten nur um weniger als eine Pixellänge, also eine Länge eines Detektorelements 132, bewegt, wie in Fig. 18 im Vergleich zu Fig. 17 erkennbar ist. Der Gegenstand wird hierbei von Aufnahme zu Aufnahme subpixelweise über eine Grenze zwischen zwei Filterbereichen 134 bewegt. Aus den Aufnahmen kann in dem Bereich, der von der Grenze überfahren worden ist, eine Auflösung erreicht werden, die im Subpixelbereich liegt, so dass der Gegenstand 168 besonders hoch aufgelöst dargestellt werden kann.

Alternativ zu einer Bewegung der Probe 106 zum Mikroskop 102 kann der Lichtfilter 130 und/oder der Detektor 128 relativ zur Probe 106 und beispielsweise dem Mikroskopgehäuse 120 bewegt werden.

In einer weiteren Ausführung kann die Ladung der einzelnen Detektorelemente innerhalb eines Filterbereichs mit dem Abbild der Probe detektorelementeweise verschoben werden und erst nach einer oder mehreren Verschiebungen ausgelesen werden. Oder es können die Ladungen, die während der Verschiebung des Probenabbilds innerhalb eines Filterbereichs einer Probenposition zugeordnet sind, einem Pixelspektralwert zugeordnet werden. Auf diese Weise kann die vom Licht erzeugte Ladung von der Probe über eine längere Zeit akkumuliert werden.

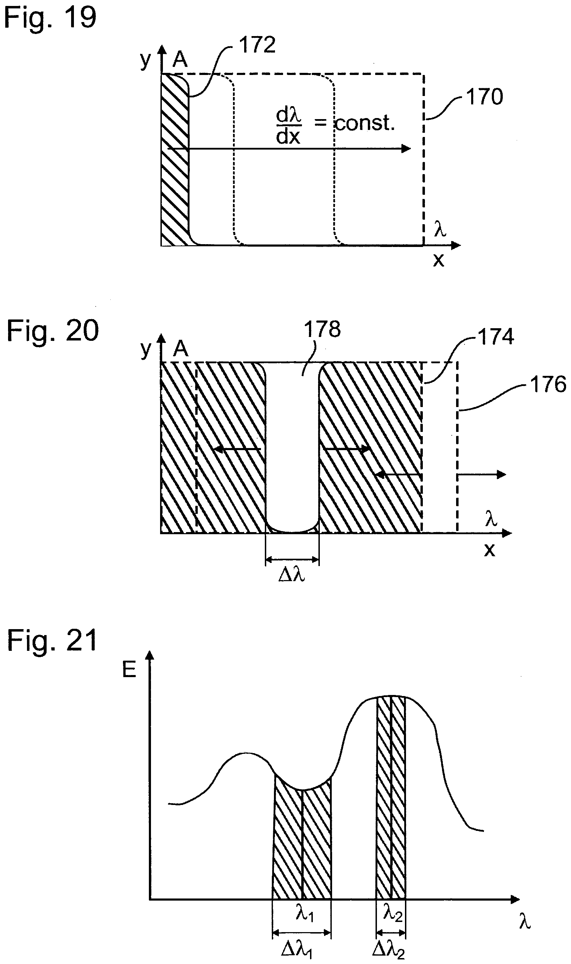

Fig. 19 zeigt ein Doppeldiagramm, in dem die Filterfläche eines Lichtfilters 170 in x- und y-Richtung dargestellt ist.

Die z-Richtung ist die Richtung der optischen Achsel 22 am Eintritt in die Kamera 126. Außerdem ist die Absorption A des Lichtfilters 170 dargestellt. Je höher die Transmission des Lichtfilters 170, desto geringer ist die Absorption A. Im schraffierten Bereich ist die Absorption idealerweise nahe 100% und der Lichtfilter 170 nicht lichtdurchlässig. Der Lichtfilter 170 ist ein Kantenfilter mit einer Kante 172 bei einer festgelegten Wellenlänge λ. Die Wellenlänge λ ist abhängig von der Lage der Kante 172 in x-Richtung des Filters 170. Weiter rechts im Filter ist die Wellenlänge λ der Kante 172 höher als weiter links. Am dargestellten Beispiel ist die Änderung der Wellenlänge der Kante pro Strecke Lichtfilter in x-Richtung konstant. Auch andere Relationen mit linearer oder nichtlinearer Änderung sind denkbar. Beim Lichtfilter 170 liegen sehr viele oder unendlich viele spektral verschieden filternde Filterbereiche sehr dicht oder unendlich dicht nebeneinander.

Bei Verwendung des Lichtfilters 170 anstelle des Lichtfilters 130 in den Figuren 15 - 18 kann jeder Probenbereich beliebig oft in verschiedenen Spektren abgebildet werden, so dass eine spektrale Auflösung des Gesamtbilds der Probe 106 von der Bewegungsstrecke der Probe 106 von Aufnahme zu Aufnahme abhängig ist. Auf diese Weise kann die spektrale Auflösung des Gesamtbilds frei gewählt werden.

Werden zwei Kantenfilter 174, 176 mit einem entgegen gesetzten Kantenverlauf hintereinander angeordnet, wie in Fig. 20 dargestellt ist, so kann ein Transmissionsfenster 178 sowohl in seiner räumlichen Ausdehnung Δx als auch in seiner spektralen Ausdehnung Δλ durch eine Bewegung der Kantenfilter 174, 176 gegeneinander eingestellt werden. Es können Spektralbereiche ausgeschlossen und eine spektrale Auflösung eingestellt werden.

Eine Anpassung des Lichtfilters 130 an den Detektor 128 ist in Fig. 21 dargestellt. In Fig. 21 ist ein Diagramm der Empfindlichkeit E des Detektors 128 über die Wellenlänge λ des registrierten Lichts aufgetragen. Die Empfindlichkeit E ist Abhängig von der Wellenlänge λ des Lichts und um eine Wellenlänge λ₁ geringer als um eine Wellenlänge λ₂. Um eine möglichst gleichmäßige Belichtung der Aufnahmen der Probe 106 über den gesamten relevanten Spektralbereich zu erzielen, ist der an der Wellenlänge λ₁ transmissive Filterbereich 134 des Lichtfilters 130 in einem größeren Wellenlängenbereich Δλ₁ transmissiv als der an der Wellenlänge λ₂ transmissive Filterbereich 134 des Lichtfilters 130, der nur im kleineren Wellenlängenbereich Δλ₂ transmissiv ist.

Eine weitere Möglichkeit zum Erzielen einer möglichst gleichmäßigen Belichtung der Aufnahmen der Probe 106 über den gesamten relevanten Spektralbereich besteht darin, eine elektronische Anpassung der Detektorelemente 132 an den vor ihnen liegenden Filterbereich 134 vorzunehmen. Bei einem weniger transmissiven Filterbereich 134 kann ein diesem Filterbereich 134 zugeordnetes Detektorelement 132 anders angesteuert werden, als ein Detektorelement 132, das einem höher transmissiven Filterbereich 134 zugeordnet ist. Die Unterschiedliche Ansteuerung kann durch eine verschiedene Einstellung des Gains und/oder der Integrationszeit der Detektorelemente 312 erreicht werden. Auch ein Pixelbinning, also das Zusammenlegen zweier oder mehrerer Pixel bzw. Detektorelemente 132, ist denkbar, ebenso wie ein Subsampling, also ein Auslesen nur jedes n-ten Detektorelements 132, mit n = 1, 2, 3, ... Die entsprechende Steuerung kann vom Steuermittel 140 vorgenommen werden.

In einem besonders vorteilhaften Ausführungsbeispiel wird bei der elektronischen Anpassung der Detektorelemente 132 eine Verschiebung der Filterbereiche 134 vor den Detektorelementen 132 berücksichtigt. Hierzu muss die Position von Lichtfilter 130 zu Detektor 128 bekannt sein, z.B. durch Positionssignale von einem der Aktuatoren 142, 144.

### Bezugszeichen

- 2: Autofokusvorrichtung
- 4: Mikroskop
- 6: Probe
- 8: Bilddetektor
- 10: Steuermittel
- 12: Lichtquelle
- 14: Lichterzeuger
- 16: Optik
- 18: Blende
- 20: optische Achse
- 22: optisches System
- 24: optisches Element
- 26: Objektiv
- 28: Mittel
- 30: Strahlteiler
- 32: Strahlteiler
- 34: Mikroskopgehäuse
- 36: optisches Element
- 38: Aktuator
- 40: Optik
- 42: Optik
- 44: Detektor
- 46: Blendenöffnung
- 48: Lichtpfad
- 50: Lichtpfad
- 52: Messlichtfoküs
- 54: Abstand
- 56: Fokus
- 58: Probenträger
- 60: Probenmaterial
- 62: Deckglas
- 64: Grenzfläche
- 66: Grenzfläche
- 68: Grenzfläche
- 70: Fokuszielebene
- 72: Detektorelement
- 74: Detektorelement
- 76: Signal
- 78: Signal
- 80: Position
- 82: Differenzsignal
- 84: Nulldurchgang
- 86: Zielposition
- 88: Richtung
- 90: Strecke
- 92: Fokuspunkt
- 94: Spiegel
- 96: Abstand
- 98: Abstand
- 100: Spiegel
- 102: Mikroskop
- 104: Probentisch
- 106: Probe
- 108: Lichtquelle
- 110: Pfeil
- 112: optisches System
- 114: Spiegel
- 116: Objektiv
- 118: Aktuator
- 120: Mikroskopgehäuse
- 122: optische Achse
- 124: optische Elemente
- 126: Kamera
- 128: Detektor
- 130: Lichtfilter
- 132: Detektorelement
- 134: Filterbereich
- 136: Aktuator
- 138: Pfeil
- 140: Steuermittel
- 142: Aktuator
- 144: Aktuator
- 146: Detektor
- 148: Detektorbereich
- 150: Detektorbereich
- 152: Detektorbereich
- 154: Spiegel
- 156: Spiegel
- 158: Filterbereich
- 160: Filterbereich
- 162: Filterbereich
- 164: Probengefäß
- 166: Gegenstand
- 168: Gegenstand
- 170: Lichtfilter
- 172: Kante
- 174: Kantenfilter
- 176: Kantenfilter
- 178: Transmissionsfenster
- A: Absorption
- E: Empfindlichkeit
- λ: Wellenlänge
- Δλ: Wellenlängenbereich
- A: Amplitude
- g: Grenzwert
- t: Zeit
- z: Richtung der optischen Achse

## Patentansprüche

1. Autofokusverfahren, bei dem Licht aus einer Lichtquelle (12) durch zwei Öffnungen eines Mittels (28) in zwei Lichtpfade (48,50) aufgeteilt wird, in einem Messlichtfokus (52) in einer Probe (6) fokussiert und von dort zurückgeworfen wird und das zurückgeworfene Licht durch ein optisches System (22) in zwei entsprechenden Lichtpfaden (48, 50) auf zumindest zwei Detektorelemente (72, 74) geführt wird, wobei der Messlichtfokus (52) in unterschiedlich stark Licht zurückwerfenden Schichten der Probe (6) bewegt wird; und das zurückgeworfene Licht durch zumindest eine Blendenöffnung (46) geführt wird, die in ihrer Form der Form der Lichtquelle (12) entspricht, in einer Bildebene des optischen Systems (22) angeordnet ist und außerhalb einer optischen Achse (20) des optischen Systems (22) angeordnet ist; und die Detektorelemente (72, 74) so angeordnet sind, dass hierbei Verläufe einer von den Detektorelementen (72, 74) registrierten Strahlungseigenschaft zueinander unterschiedlich sind und eine Fokusposition in Abhängigkeit von den Verläufen eingestellt wird.

2. Verfahren nach Anspruch 1, **dadurch gekennzeichnet, dass** aus dem Messlichtfokus (52) reflektiertes Licht aus beiden Lichtpfaden (48, 50) gleich stark auf die Detektorelemente (72, 74) auftrifft.

3. Verfahren nach einem der vorhergehenden Ansprüche, **dadurch gekennzeichnet, dass** Licht, das von oberhalb oder unterhalb des Messlichtfokus (52) reflektiert wird, ungleich stark auf die Detektorelemente (72, 74) auftrifft.

4. Verfahren nach einem der vorhergehenden Ansprüche, **dadurch gekennzeichnet, dass** durch ein optisches Mittel eine Selektion des aus unterschiedlichen Grenzschichten (64, 66) reflektierten Lichts nach unterschiedlicher optischer Weglänge durchgeführt wird.

5. Verfahren nach einem der vorhergehenden Ansprüche, **dadurch gekennzeichnet, dass** durch ein optisches Mittel eine Selektion des aus unterschiedlichen Grenzschichten (64, 66) reflektierten Lichts nach unterschiedlichen Richtungen auf die Detektorelemente (72, 74) zu durchgeführt wird.

6. Verfahren nach einem der vorhergehenden Ansprüche, **dadurch gekennzeichnet, dass** die Lichtpfade (48, 50) durch einen abgeschatteten Bereich voneinander getrennt sind.

7. Verfahren nach einem der vorhergehenden Ansprüche, **dadurch gekennzeichnet, dass** das Licht in den Lichtpfaden(48, 50) unterschiedliche spektrale Eigenschaften aufweist und die Lichtpfade (48, 50) vor den Detektorelementen (72, 74) nach den spektralen Eigenschaften getrennt werden.

8. Verfahren nach einem der vorhergehenden Ansprüche, **dadurch gekennzeichnet, dass** die Verläufe kontinuierlich erfasst werden.

9. Verfahren nach einem der vorhergehenden Ansprüche, **dadurch gekennzeichnet, dass** ein Fokus des optischen Systems (22) so eingestellt wird, dass Signale (76, 78) der Detektorelemente (72, 74) in einem festen Verhältnis zueinander stehen und insbesondere gleich stark sind.

10. Verfahren nach einem der vorhergehenden Ansprüche, **dadurch gekennzeichnet, dass** der Messlichtfokus (52) auf eine Licht zurückwerfenden Grenzschicht (66) eingestellt und danach die Probe (6) senkrecht zur optischen Achse (20) des optischen Systems (22) bewegt wird und die Signale (76, 78) der Detektorelemente (72, 74) anschliessend auf Plausibilität hinsichtlich einer nach wie vor vorhandenen Grobeinstellung auf die reflektierende Grenzschicht (66) überprüft werden.

11. Verfahren nach einem der vorhergehenden Ansprüche, **dadurch gekennzeichnet, dass** die Lichtquelle (12) ein Lichtmuster aufweist, das in der Probe (6) abgebildet wird, wobei reflektiertes Licht aus mehreren Musterpunkten des Lichtmusters jeweils nach Lichtpfaden (48, 50) getrennt erfasst wird.

12. Autofokuseinrichtung (2) umfassend: eine Lichtquelle (12); ein Mittel (28) mit zwei Öffnungen zum Aufteilen des Lichts aus der Lichtquelle in zwei Lichtpfade (48, 50);
ein Objektiv (26) zum Fokussieren des aufgeteilten Lichts in einem Messlichtfokus (52) in einer Probe (6) und zum Führen des von dort zurückgeworfenem Lichts in zwei entsprechenden Lichtpfaden auf zumindest zwei Detektorelemente (72, 74); und ein optisches System (22) zum Abbilden des in der Probe erzeugten Lichtquellenmusters in eine Bildebene des optischen Systems (22);
zumindest eine Blendenöffnung (46), die in ihrer Form der Form der Lichtquelle (12) entspricht, die in besagter Bildebene und außerhalb einer optischen Achse (20) des optischen Systems (22) angeordnet ist;
einen Aktuator (38) und ein Steuermittel (10) zum Bewegen eines Elements (36) des Objektivs (26) relativ zur Probe (6) durch den Aktuator (38) derart, dass der Messlichtfokus (52) in unterschiedlich stark Licht zurückwerfenden Schichten der Probe (6) bewegt wird; derart, dass
das zurückgeworfene Licht durch die zumindest eine Blendenöffnung (46) geführt wird, wobei die Detektorelemente (72, 74) so angeordnet sind, dass hierbei Verläufe einer von den Detektorelementen (72, 74) registrierten Strahlungseigenschaft unterschiedlich sind und das Steuermittel (10) zum Auswerten der Verläufe an mehreren Positionen des Messlichtfokus (52) vorgesehen ist..

## Claims

1. Autofocus method, in which light from a light source (12) is separated into two light paths (48, 50) by two openings of a means (28), focused at a measurement light focus (52) in a sample (6) and reflected from there, and the reflected light is guided through an optical system (22) in two corresponding light paths (48, 50) onto at least two detector elements (72, 74), wherein the measurement light focus (52) is moved in layers of the sample (6) which reflect light to different extents; and the reflected light is guided through at least one aperture (46), which corresponds in terms of its shape to the light source (12), is arranged on an image plane of the optical system (22) and outside an optical axis (20) of the optical system (22); and the detector elements (72, 74) are arranged in such a way that profiles of a radiation property registered by the detector elements (72, 74) are different from each other and a focus position is set in a manner dependent on the profiles.

2. Method according to claim 1, **characterised in that** light from both light paths (48, 50) that is reflected from the measurement light focus (52) strikes the detector elements (72, 74) to an equal extent.

3. Method according to any one of the preceding claims, **characterised in that** light that is reflected from above or below the measurement light focus (52) strikes the detector elements (72, 74) to an unequal extent.

4. Method according to any one of the preceding claims, **characterised in that** a selection of light reflected from different interface layers (64, 66) is carried out by an optical means according to different optical path lengths.

5. Method according to any one of the preceding claims, **characterised in that** a selection of light reflected from different interface layers (64, 66) is carried out by an optical means according to different directions towards the detector elements (72,74).

6. Method according to any one of the preceding claims, **characterised in that** the light paths (48, 50) are separated from each other by a shaded area.

7. Method according to any one of the preceding claims, **characterised in that** the light in the light paths (48, 50) has different spectral properties and the light paths (48, 50) are separated in front of the detector elements (72, 74) according to the spectral properties.

8. Method according to any one of the preceding claims, **characterised in that** the profiles are detected continuously.

9. Method according to any one of the preceding claims, **characterised in that** a focus of the optical system (22) is adjusted such that signals (76, 78) of the detector elements (72, 74) are in a fixed ratio to one another and in particular are equally strong.

10. Method according to any one of the preceding claims, **characterised in that** the measurement light focus (52) is adjusted on an interface layer (66) reflecting light and afterwards the sample (6) is moved perpendicularly to the optical axis (20) of the optical system (22) and the signals (76, 78) of the detector elements (72, 74) are subsequently checked for plausibility with respect to a rough adjustment still in effect on the reflecting interface layer (66).

11. Method according to any one of the preceding claims, **characterised in that** the light source (12) has a light pattern, which is projected in the sample (6), wherein reflected light from several pattern points of the light pattern is detected respectively separated by light paths (48, 50).

12. Auto focus device (2) comprising a light source (12), means (28) with two openings for separating the light from the light source into two light paths (48, 50);
an objective (26) for focussing the separated light at a measurement light focus (52) in a sample (6) and for guiding the light reflected from there in two corresponding light paths onto at least two detector elements (72, 74); and an optical system (22) for projecting the light source pattern generated in the sample onto an image plane of the optical system (22);
at least one aperture (46), which corresponds in terms of its shape to the light source (12) and which is arranged on said image plane and outside an optical axis (20) of the optical system (22);
an actuator (38) and control means (10) for moving an element (36) of the objective (26) relative to the sample (6) by the actuator (38) such that the measurement light focus (52) is moved in layers of the sample (6) which reflect light to different extents; such that
the reflected light is guided through the at least one aperture (46), wherein the detector elements (72, 74) are arranged in such a way that, in this case, profiles of a radiation property registered by the detector elements (72, 74) are different and the control means (10) is provided for evaluating the profiles at several positions of the measurement light focus (52).

## Revendications

1. Procédé de mise au point automatique, selon lequel la lumière provenant d'une source de lumière (12) est divisée en deux trajets lumineux (48, 50) par deux ouvertures d'un moyen (28), est focalisée dans un foyer de lumière de mesure (52) dans une sonde (6) et est renvoyée de là et la lumière renvoyée est guidée par un système optique (22) dans deux trajets lumineux (48, 50) correspondants sur au moins deux éléments de détection (72, 74), dans lequel le foyer de lumière de mesure (52) est déplacé dans des couches de la sonde (6) renvoyant la lumière de façon plus ou moins intense ; et la lumière renvoyée est guidée à travers au moins une ouverture de diaphragme (46), dont sa forme correspond à la forme de la source de lumière (12), qui est agencée dans un plan d'image du système optique (22) et qui est agencée à l'extérieur d'un axe optique (20) du système optique (22) ; et les éléments de détection (72, 74) sont agencés de telle sorte que les variations d'une propriété de rayonnement enregistrée par les éléments de détection (72, 74) soient dans ce cas différentes les unes des autres et qu'une position focale soit réglée en fonction des variations.

2. Procédé selon la revendication 1, **caractérisé en ce que** la lumière réfléchie du foyer de lumière de mesure (52) sortant des deux trajets lumineux (48, 58) est incidente avec la même intensité sur les éléments de détection (72, 74).

3. Procédé selon l'une quelconque des revendications précédentes, **caractérisé en ce que** la lumière, qui est réfléchie par le dessus ou par le dessous du foyer de lumière de mesure (52), est incidente sur les éléments de détection (72, 74) de façon plus ou moins intense.

4. Procédé selon l'une quelconque des revendications précédentes, **caractérisé en ce qu'**un moyen optique permet de réaliser une sélection de la lumière réfléchie à partir de différentes couches limites (64, 66) en fonction de différentes longueurs d'onde optiques.

5. Procédé selon l'une quelconque des revendications précédentes, **caractérisé en ce qu'**un moyen optique permet de réaliser une sélection de la lumière réfléchie à partir de différentes couches limites (64, 66) en fonction de différentes directions sur les éléments de détection (72, 74).

6. Procédé selon l'une quelconque des revendications précédentes, **caractérisé en ce que** les trajets lumineux (48, 50) sont séparés les uns des autres par une zone ombrée.

7. Procédé selon l'une quelconque des revendications précédentes, **caractérisé en ce que** la lumière dans les trajets lumineux (48, 50) présente différentes propriétés spectrales et les trajets lumineux (48, 50) devant les éléments de détection (72, 74) sont séparés en fonction des propriétés spectrales.

8. Procédé selon l'une quelconque des revendications précédentes, **caractérisé en ce que** les variations sont détectées en continu.

9. Procédé selon l'une quelconque des revendications précédentes, **caractérisé en ce qu'**un foyer du système optique (22) est réglé de sorte que les signaux (76, 78) des éléments de détection (72, 74) se trouvent dans une relation fixe les uns par rapport aux autres et présentent en particulier une intensité identique.

10. Procédé selon l'une quelconque des revendications précédentes, **caractérisé en ce que** le foyer lumineux (52) est réglé sur une couche limite (66) renvoyant la lumière et, après cela, la sonde (6) est déplacée perpendiculairement à l'axe optique (20) du système optique (22) et les signaux (76, 78) des éléments de détection (72, 74) sont ensuite contrôlés sur une plausibilité concernant un réglage grossier encore présent sur la couche limite réfléchissante (66).

11. Procédé selon l'une quelconque des revendications précédentes, **caractérisé en ce que** la source de lumière (12) comprend un motif lumineux qui est reproduit dans la sonde (6), dans lequel la lumière réfléchie composée de plusieurs points de motif du motif lumineux est détectée de manière séparée à chaque fois en fonction des trajets lumineux (48, 50).

12. Dispositif de mise au point automatique (2) comprenant : une source de lumière (12) ; un moyen (28) présentant deux ouvertures destinées à répartir la lumière sur la source de lumière en deux trajets lumineux (48 ; 50) ;
un objectif (26) destiné à focaliser la lumière divisée dans un foyer de lumière de mesure (52) dans une sonde (6) et à guider la lumière renvoyée de là dans deux trajets lumineux correspondants sur au moins deux éléments de détection (72, 74) ;
et un système optique (22) destiné à reproduire le motif de source de lumière produit dans la sonde dans un plan d'image du système optique (22) ;
au moins une ouverture de diaphragme (46), dont la forme correspond à la forme de la source de lumière (12), qui est agencée dans ledit plan d'image et à l'extérieur d'un axe optique (20) du système optique (22) ;
un actionneur (38) et un moyen de commande (10) destiné à déplacer un élément (36) de l'objectif (26) par rapport à la sonde (6) au moyen de l'actionneur (38), de telle manière que le foyer de lumière de mesure (52) est déplacé dans des couches de la sonde (6) renvoyant la lumière de manière plus ou moins intense ; de telle manière que :
la lumière renvoyée est guidée à travers ladite au moins une ouverture de diaphragme (46), les éléments de détection (72, 74) étant agencés de sorte que les variations d'une propriété de rayonnement enregistrées par les éléments de détection (72, 74) sont différentes et le moyen de commande (10) étant destiné à commander les variations en plusieurs positions du foyer de lumière de mesure (52).
